# EUROPÄISCHE PATENTSCHRIFT

(11) **EP 2 855 069 B1**
(45) Veröffentlichungstag und Bekanntmachung des Hinweises auf die Patenterteilung: **06.03.2019**
(21) Anmeldenummer: 13725351.4
(22) Anmeldetag: 24.05.2013
(51) Int. Cl.: B23K 9/20, B23K 11/00, B23K 20/12, B23K 35/02, F16B 37/06, B21J 15/02

(54) **SCHWEISSHILFSFÜGETEIL MIT EINEM PLASTISCH VERFORMBAREN SPITZENBEREICH ; VERFAHREN ZUM VERBINDEN VON BAUTEILEN MIT DIESEM SCHWEISSHILFSFÜGETEIL**
WELDING AUXILIARY JOINING PART WITH A PLASTICALLY DEFORMABLE TIP REGION; METHOD FOR CONNECTING COMPONENTS WITH THIS WELDING AUXILIARY JOINING PART
ÉLÉMENT D'AIDE AU SOUDAGE MUNI D'UNE PARTIE POINTUE À DÉFORMATION PLASTIQUE ; PROCÉDÉ POUR ASSEMBLER DES PIÈCES AU MOYEN DE CET ÉLÉMENT D'AIDE AU SOUDAGE

(30) Priorität: 31.05.2012 DE 102012010870
(43) Veröffentlichungstag der Anmeldung: 08.04.2015
(73) Patentinhaber: Böllhoff Verbindungstechnik GmbH, 33649 Bielefeld (DE)
(72) Erfinder: DRAHT, Torsten, 33758 Schloss Holte-Stukenbrock (DE); HARTWIG-BIGLAU, Sergej, 32584 Löhne (DE)
(74) Vertreter: Heyer, Volker
(86) Internationale Anmeldenummer: PCT/EP2013/060709
(87) Internationale Veröffentlichungsnummer: WO 2013/178542

(56) Entgegenhaltungen:
- WO-A1-02/062518
- DE-A1-102005 006 253
- DE-A1-102007 036 416
- DE-A1-102008 031 121
- DE-A1-102009 035 338
- US-A- 5 739 498

## Beschreibung

### 1. Gebiet der Erfindung

Die vorliegende Erfindung betrifft ein Schweißhilfsfügeteil in Form eines Bolzens, ein Setzverfahren für dieses Schweißhilfsfügeteil in einem Bauteil aus einem nicht oder schlecht schweißbarem Material, ein Bauteil, ein Schweißverfahren, ein Verbindungsverfahren zum Verbinden von mehreren Bauteilen mithilfe des Schweißhilfsfügeteils und mindestens ein erstes Bauteil aus einem nicht oder schlecht schweißbarem Material und mindestens ein zweites Bauteil aus schweißbarem Material oder ein zweites Bauteil mit einem Bereich aus schweißbarem Material, die mithilfe des Schweißhilfsfügeteils miteinander verbunden worden sind, siehe den Oberbegriff der Patentansprüche 1, 11, 17, 18, 21 und 22 (siehe beispielsweise US 5,739,498).

### 2. Hintergrund der Erfindung

Das Schweißen ist ein weit verbreitetes Verfahren, um Bauteile aus schweißbarem Material, wie beispielsweise Stahl, miteinander zu verbinden. Beispielgebende Schweißverfahren sind das Widerstandspunktschweißen und das Bolzenschweißen, bei denen punktuell zwei sich gegenüberliegende Bauteile mittels Schweißen miteinander verbunden werden. Ein weiteres Schweißverfahren ist das Bolzenschweißen mit Lichtbogen.

In verschiedenen Industriezweigen müssen mittlerweile Bauteile miteinander verbunden werden, die teilweise aus nicht oder schlecht schweißbarem Material bestehen. Nichtsdestotrotz stellt das Schweißen ein effektives Verbindungsverfahren selbst für diese Bauteile aus nicht oder schlecht schweißbarem Material dar. Zu diesem Zweck wird ein Schweißhilfsfügeteil aus schweißbarem Material in dem Bauteil aus nicht oder schlecht schweißbarem Material befestigt. Nachfolgend wird eine Schweißverbindung zwischen einem Bauteil aus schweißbarem Material und dem Schweißhilfsfügeteil hergestellt, sodass das Bauteil aus schweißbarem Material und das Bauteil aus nicht oder schlecht schweißbarem Material über das Schweißhilfsfügeteil miteinander verbunden sind. Beispiele für Bauteile aus nicht oder schlecht schweißbarem Material sind Aluminiumbleche, Formteile aus Kunststoff oder faserverstärktem Kunststoff, beispielsweise kohlefaserverstärkter Kunststoff, um nur einige Beispiele zu nennen. Das oben beschriebene Verfahren geht beispielsweise aus der deutschen Patentanmeldung DE 100 15 713 A1 hervor.

Aus der deutschen Patentanmeldung 10 2005 006 253 A1 ist ein ähnliches Verbindungsverfahren mittels Schweißen zwischen einem Bauteil aus nicht oder schlecht schweißbarem Material und einem Bauteil aus schweißbarem Material beschrieben. Hier wird ein Bolzen mit einem Schaft und einem Kopf aus schweißbarem Material in ein vorgefertigtes Loch in dem Bauteil aus nicht oder schlecht schweißbarem Material eingesetzt und nachfolgend mit dem Bauteil aus schweißbarem Material verschweißt. Um den Bolzen mit seinem Schaft verlässlich im vorgelochten Bereich des Bauteils aus nicht oder schlecht schweißbarem Material zu befestigen, wird der Schaft des Bolzens nach dem Schweißen lateral durch Stauchen verformt, sodass sich eine kraftschlüssige Verbindung zwischen dem Schaft des Bolzens und der Innenwand des Lochs des Bauteils ergibt. Aufgrund der Vielzahl der Verfahrensschritte ist das hier beschriebene Verbindungsverfahren technisch aufwändig und zeitintensiv.

In den deutschen Patentanmeldungen DE 10 2004 025 492 A1 und DE 10 2007 036 416 A1 werden jeweils Nieten, Bolzen oder Nägel als Schweißhilfsfügeteil in Bauteilen aus nicht oder schlecht schweißbarem Material gesetzt. Die Spitze des Schweißhilfsfügeteils ragt an der einen Seite des Bauteils aus nicht oder schlecht schweißbarem Material hervor und bildet einen Schweißpunkt mit sehr kleiner Kontaktfläche zum Kontaktieren des gegenüberliegenden Bauteils aus schweißbarem Material. Sobald das Schweißhilfsfügeteil und das Bauteil aus schweißbarem Material, beispielsweise mithilfe von Widerstandsschweißen in der Art des Widerstandspunktschweißens oder des Widerstandsbolzenschweißens, miteinander verbunden werden, wird die Spitze oder Schneide des Schweißhilfsfügeteils aufgeschmolzen, sodass sich eine sogenannte Schweißlinse ausbildet. Aufgrund der geringen Kontaktfläche zwischen Schweißhilfsfügeteil und Bauteil aus schweißbarem Material an der Spitze oder im Schneidbereich des Schweißhilfsfügeteils ist die Kontaktzone zum Schweißen relativ klein. Dies verlängert den Schweißvorgang oder verschlechtert die Schweißverbindung aufgrund der geringen Kontaktfläche im Vergleich zu einander gegenüberliegenden Bauteilen, die sich in einem größeren Bereich kontaktieren. Entsprechend dem kleinen Kontaktbereicht zwischen Schweißhilfsfügeteil und dem Bauteil aus schweißbarem Material fällt die sich ausbildende Schweißlinse klein aus. Dies beeinträchtigt u. a. die mechanische Belastbarkeit sowie die Lebensdauer der hergestellten Verbindung. Zudem wird bei der Nutzung eines Halbhohlstanzniets als Schweißhilfsfügeteil ein Abfallbutzen aus nicht oder schlecht schweißbarem Material erzeugt. Dieser befindet sich beim nachfolgenden Schweißen in der Schweißzone und im Bereich der Schweißlinse, sodass die entstehende Schweißverbindung durch diese Verschmutzung in ihrer Qualität beeinträchtigt wird.

Des Weiteren wird in der DE 10 2004 025 492 A1 als vorteilhaft angesehen, mithilfe des Setzvorgangs des Schweißhilfsfügeteils in dem Bauteil aus nicht oder schlecht schweißbarem Material das Bauteil aus schweißbarem Material im Kontaktbereich für das spätere Schweißen mechanisch zu deformieren. Im Speziellen dringt eine Spitze oder eine Schneide des Schweißhilfsfügeteils in das Bauteil aus schweißbarem Material ein oder erzeugt in diesem Bauteil aus schweißbarem Material eine Vertiefung. Diese Vertiefung soll dann die Ausbildung einer ausreichend großen Schweißlinse während des Widerstandsschweißens zwischen dem Schweißhilfsfügeteil und dem Bauteil aus schweißbarem Material im Bereich dieser Senke bzw. Vertiefung unterstützen. Zur Verwirklichung dieses Verfahrens ist es jedoch erforderlich, bereits alle miteinander zu verbindenden Bauteile übereinander anzuordnen, bevor das Schweißhilfsfügeteil gesetzt wird. Andernfalls ist ein zusätzlicher Arbeitsaufwand erforderlich, um die Vertiefung im Bauteil aus schweißbarem Material zu erzeugen und gegenüber den bereits gesetzten Schweißhilfsfügeteilen auszurichten. Dies ist aufwändig, zeitintensiv, erfordert zudem zusätzlichen apparativen Aufwand zur genauen Positionierung der miteinander zu verbindenden Bauteile und ist in der Wahl der möglichen Schweißverfahren und der Prozessabfolgen limitiert.

Es ist daher die Aufgabe vorliegender Erfindung, ein im Vergleich zum Stand der Technik weniger zeitintensives Verbindungsverfahren zwischen mindestens einem Bauteil aus nicht schweißbarem Material und mindestens einem Bauteil aus schweißbarem Material bereitzustellen. Es ist des Weiteren eine Aufgabe vorliegender Erfindung, ein einfach herstellbares, mit geringem Aufwand zu setzendes und ein flexibel verwendbares Schweißhilfsfügeteil für ein derartiges Verfahren bereitzustellen.

### 3. Zusammenfassung der Erfindung

Die oben genannten Aufgaben werden durch ein Schweißhilfsfügeteil in Form eines Bolzens gemäß Anspruch 1, durch die Verwendung eines Bolzens gemäß Anspruch 10, durch ein Setzverfahren für ein Schweißhilfsfügeteil gemäß Anspruch 11, durch mindestens ein Bauteil aus einem nicht oder schlecht schweißbarem Material mit einem darin gesetzten Schweißhilfsfügeteil gemäß Anspruch 17, ein Schweißverfahren zum Verbinden von mindestens einem ersten Bauteil aus nicht oder schlecht schweißbarem Material und einem darin gesetzten Schweißhilfsfügeteil mit einem zweiten Bauteil aus schweißbarem Material oder einem zweiten Bauteil mit mindestens einem Bereich aus schweißbarem Material gemäß Anspruch 18, durch ein Verbindungsverfahren für mindestens ein Bauteil aus nicht oder schlecht schweißbarem Material mit einem Bauteil aus schweißbarem Material oder einem Bauteil mit mindestens einem Bereich aus schweißbarem Material durch eine Kombination eines Setzverfahrens und eines Schweißverfahrens gemäß Anspruch 21 und durch mindestens ein erstes Bauteil aus einem nicht oder schlecht schweißbarem Material und mindestens ein zweites Bauteil aus schweißbarem Material oder mindestens ein zweites Bauteil mit mindestens einem Bereich aus schweißbarem Material, die miteinander über ein darin gesetztes Schweißhilfsfügeteil verbunden sind, gemäß Anspruch 22. Vorteilhafte Ausgestaltungen und Weiterentwicklungen vorliegender Erfindung gehen aus der Beschreibung, den begleitenden Zeichnungen sowie den anhängenden Ansprüchen hervor.

Vorliegende Erfindung offenbart ein Schweißhilfsfügeteil in Form eines Bolzens zum Fügen in mindestens ein Bauteil und Herstellen einer Schweißverbindung aus einer Mehrzahl von Bauteilen, vorzugsweise mit mindestens einem Bauteil aus einem nicht oder schlecht schweißbaren Material. Das erfindungsgemäße Schweißhilfsfügeteil weist die folgenden Merkmale auf: einen Kopf, einen Spitzenbereich, der sich in Längsrichtung des Schweißhilfsfügeteils erstreckt und eine maximale Dicke quer zur Längsrichtung aufweist, und vorzugsweise einen Schaft, wobei der Bolzen aus einem schweißbarem Material besteht, das während eines Setzverfahrens des Schweißhilfsfügeteils plastisch verformbar ist.

Das erfindungsgemäße Schweißhilfsfügeteil ist in Form eines Bolzens aus schweißbarem Stahl mit einem Kohlenstoffäquivalent von 0,2 bis 0,8, vorzugsweise von 0,3 bis 0,6, ausgebildet. Das Kohlenstoffäquivalent (CEV) ist in der Werkstoffkunde ein Maß zur Beurteilung der Schweißeignung von unlegierten und niedriglegierten Stählen. Der Kohlenstoffgehalt und eine Vielzahl anderer Legierungselemente im Stahl beeinflussen sein Verhalten. Zur Beurteilung der Schweißeignung ist deshalb im Kohlenstoffäquivalent der Kohlenstoffgehalt und der gewichtete Anteil der Elemente, welche die Schweißeignung des Stahls ähnlich beeinflussen, wie es vom Kohlenstoff zu erwarten wäre, zu einem Zahlenwert zusammengefasst. Bevorzugt eignet sich dieses Schweißhilfsfügeteil zum Setzen mithilfe eines Hochgeschwindigkeitsfügeverfahrens oder allgemein für ein Setzverfahren, bei dem das Schweißhilfsfügeteil mithilfe nur eines Impulses in das mindestens eine Bauteil aus nicht oder schlecht schweißbarem Material setzbar ist. In gleicher Weise ist es aber auch bevorzugt, das Schweißhilfsfügeteil mit bekannten Setzverfahren zu setzen, die beispielsweise für Halbhohlstanzniete Anwendung finden. Für die verschiedenen Setzverfahren hat es sich als besonders vorteilhaft erwiesen, den Bolzen ohne Schaft auszubilden. Der Bolzen umfasst einen Spitzenbereich, der sich in Längsrichtung des Schweißhilfsfügeteils erstreckt. Der Spitzenbereich umfasst eine maximale Dicke angrenzend an den Kopf oder angrenzend an einen Schaft des Schweißhilfsfügeteils. An seinem dem Kopf abgewandten Ende umfasst der Spitzenbereich eine Spitze, zu der der Spitzenbereich kontinuierlich oder stufenweise zuläuft.

Gemäß einer Ausführungsform umfasst das Schweißhilfsfügeteil eine ogivale Spitze mit einem Ogivalitätsfaktor von 1 bis 10, vorzugsweise von 3-5, die sich für das impulsartige Hochgeschwindigkeitsfügen eignet. Basierend auf dieser Formgebung findet eine vorteilhafte Materialverdrängung im Bauteil aus nicht oder schlecht schweißbarem Material in radialer Richtung bezogen auf den Schaft des Bolzens und im Bereich der Spitze des Schafts statt. Ein weiterer Vorteil besteht darin, dass sich das Schweißhilfsfügeteil aufgrund dieser Formgebung in seinem Spitzenbereich mechanisch derart deformieren lässt, dass sich ein für das spätere Schweißen des Schweißhilfsfügeteil vorteilhafter Schweißkopf oder Schweißpunkt ausbildet. Der Schweißkopf stellt eine verlässliche Kontaktfläche zum Widerstandsschweißen oder Lichtbogenschweißen am Schweißhilfsfügeteil bereit. Daher wird im Weiteren auch ein nur als Fläche vorhandener Schweißpunkt allgemein als Schweißkopf bezeichnet und verstanden. Eine Anpassung an unterschiedliche Materialstärken des mindestens einen Bauteils aus nicht oder schlecht schweißbarem Material erfolgt bevorzugt über eine entsprechende Anpassung der Länge des Schafts oder des Spitzenbereichs des Schweißhilfsfügeteils bei gleichbleibender Spitzengeometrie.

Gemäß unterschiedlicher bevorzugter Ausführungsformen des erfindungsgemäßen Schweißhilfsfügeteils ist der Kopf in seinem Durchmesser größer oder gleich einem Durchmesser des Schafts oder einer maximalen Dicke des Spitzenbereichs des Schweißhilfsfügeteils ausgebildet. Ist der Kopfdurchmesser größer als der Durchmesser des Schaftes oder der maximalen Dicke des Spitzenbereichs, so ist vorzugsweise an der dem Schaft zugewandten Seite des Kopfes eine Ringnut zur Aufnahme einer Materialverformung eines zum Kopf benachbarten Bauteils ausgebildet. In gleicher Weise ist es bevorzugt, anstelle der Ringnut oder in Kombination mit der Ringnut in radialer Richtung verlaufende Rillen oder Rippen auszuformen, um Aufnahmeräume zur Aufnahme einer Materialverformung eines zum Kopf benachbarten Bauteils bereitzustellen.

Um des Weiteren eine verlässliche Verbindung zwischen dem Schweißhilfsfügeteil und einem Bauteil aus nicht oder schlecht schweißbarem Material bereitzustellen, ist der Schaft des Schweißhilfsfügeteils zylindrisch, zylinderähnlich oder zumindest teilweise keglig ausgebildet. Zylinderähnlich schließt dabei auch eine polygonale Querschnittsgestalt des Schweißhilfsfügeteils ein. Gemäß einer weiteren bevorzugten Ausführungsform unterstützt eine äußere Rändelung oder Profilierung des Schafts des Schweißhilfsfügeteils die Verbindung zu dem Bauteil aus nicht oder schlecht schweißbarem Material, in welches das Schweißhilfsfügeteils ohne Vorlochen gesetzt worden ist.

Des Weiteren ist es bevorzugt, den Spitzenbereich des Schweißhilfsfügeteils mit oder ohne Schaft mit einer kegelförmigen oder einer pyramidenförmigen Spitze auszubilden. In diesem Zusammenhang hat es sich als vorteilhaft erwiesen, wenn die Seitenflächen der Spitze mit der Längsachse des Schweißhilfsfügeteils einen Winkel im Bereich von 5 ° bis 60 °, vorzugsweise von 15 ° bis 40 ° und noch mehr bevorzugt von 20 ° bis 30 °, einschließen.

Vorliegende Erfindung offenbart zudem die Verwendung des oben beschriebenen Bolzens mit seinen bevorzugten Ausgestaltungen als Schweißhilfsfügeteil.

Vorliegende Erfindung umfasst außerdem ein Setzverfahren für ein Schweißhilfsfügeteil, insbesondere das oben beschriebene Schweißhilfsfügeteil in seinen unterschiedlichen bevorzugten Ausführungsformen, in mindestens einem Bauteil aus nicht oder schlecht schweißbarem Material ohne Vorlochen des mindestens einen Bauteils. Dieses erfindungsgemäße Setzverfahren weist die folgenden Schritte auf: Setzen des Schweißhilfsfügeteils in das mindestens eine Bauteil, wobei kein Abfallmaterial, insbesondere kein Setzbutzen, von dem mindestens einen Bauteil getrennt wird, und mechanisches Deformieren des Schweißhilfsfügeteils an einer Austrittsstelle des Schweißhilfsfügeteils aus dem mindestens einen Bauteil während des Setzens derart, dass ein Spitzenbereich des Schweißhilfsfügeteils zumindest teilweise in einen Schweißkopf oder Schweißpunkt umgeformt wird. Gemäß der Erfindung wird das Schweißhilfsfügeteil mithilfe einer impulsförmigen Kraft gesetzt, die das Schweißhilfsfügeteil auf eine Geschwindigkeit von mindestens 5 m/s beschleunigt. Vorzugsweise wird das Schweißhilfsfügeteil mit Hilfe des Hochgeschwindigkeitsfügens bzw. des impulsgeschwindigkeitsfügens gesetzt, bei dem es auf eine Geschwindigkeit im Bereich von 5 m/s bis 50 m/s, insbesondere von 10 m/s bis 45 m/s, beschleunigt wird. Dabei ist es ebenfalls bevorzugt, das Schweißhilfsfügeteil auf eine Geschwindigkeit von mindestens 10 m/s, weiter bevorzugt mindestens 20 m/s, noch mehr bevorzugt mindestens 30 m/s und zudem bevorzugt mindestens 40 m/s zu beschleunigen. Des Weiteren wird das Schweißhilfsfügeteil vorzugsweise in ein oder eine Mehrzahl von Bauteilen gesetzt, deren Gesamtdicke sich bei einer oder mehreren Lagen im Bereich von 0,5 mm bis 10 mm, bevorzugt von 0,5 mm bis 8 mm und weiter bevorzugt von 0,5 mm bis 5 mm befindet. An diese Gesamtdicke wird vorzugsweise eine Länge des Schweißhilfsfügeteils angepasst, um eine optimale Funktionalität zu erzielen.

Das erfindungsgemäße Setzverfahren des Schweißhilfsfügeteils dient der Vorbereitung des späteren Verbindens des mindestens einen Bauteils aus nicht oder schlecht schweißbarem Material mit mindestens einem weiteren Bauteil aus schweißbarem Material oder allgemein einem Trägerbauteil mittels Schweißen. Sollte das Trägerbauteil oder allgemein das mindestens eine weitere Bauteil nicht aus schweißbarem Material bestehen, ist es bevorzugt, in diesem mindestens einen weiteren Bauteil oder Trägerbauteil mindestens einen Bereich aus schweißbarem Material vorzusehen. Dieser Bereich aus schweißbarem Material besteht vorzugsweise aus einem Schweißhilfsfügeteil gemäß obiger Beschreibung oder wie es aus dem Stand der Technik bekannt ist.

Im Rahmen des Setzverfahrens wird in dem nicht oder schlecht schweißbarem Material ein schweißbares Schweißhilfsfügeteil befestigt. Dieses Schweißhilfsfügeteil besitzt vorzugsweise die Form eines Bolzens, wie er oben beschrieben worden ist. Dieser Bolzen bzw. das Schweißhilfsfügeteil wird vorzugsweise mithilfe eines Hochgeschwindigkeitssetzverfahrens in das mindestens eine Bauteil aus nicht oder schlecht schweißbarem Material gesetzt, wobei alternativ dazu auch andere bekannte Verfahren zum Setzen eines Fügeelements anwendbar sind. Beim Hochgeschwindigkeitssetzverfahren wird das Schweißhilfsfügeteil auf eine Geschwindigkeit von mindestens 5 m/s beschleunigt, bevor es in das nicht vorgelochte Bauteil eindringt. In den oben genannten Setzverfahren wird das Schweißhilfsfügeteil vorzugsweise mit hydraulischen, elektromagnetischen, mechanischen oder Druckluftbetriebenen Antriebsmitteln beschleunigt. Eine weitere Möglichkeit besteht darin, das Schweißhilfsfügeteil mithilfe einer zu zündenden Gasladung in das Bauteil einzuschießen.

Basierend auf der Formgebung des Schweißhilfsfügeteils, vorzugsweise in Form eines Bolzens mit den oben beschriebenen Merkmalen, entsteht kein Abfallmaterial während des Setzvorgangs. Dies vereinfacht das gesamte Setzverfahren, weil dieses Abfallmaterial das weitere Setzverfahren nicht stört und zudem auch nicht aus der Fügezone abgeführt werden muss. Zudem befindet sich dann auch kein Abfallmaterial in der späteren Schweißzone und beeinträchtigt die herzustellende Schweißverbindung.

Zur Vorbereitung des nachfolgenden Schweißverfahrens wird das Schweißhilfsfügeteil während des Setzverfahrens in seinem Spitzenbereich derart mechanisch plastisch deformiert, dass sich ein Schweißkopf oder Schweißpunkt ausbildet. Mithilfe dieses Schweißkopfes/Schweißpunkts wird in einem späteren Schweißverfahren ein Bauteil aus schweißbarem Material oder ein Bereich eines Bauteils aus schweißbarem Material kontaktiert. Dadurch können beispielsweise mithilfe eines Widerstandsschweißverfahrens dieser Schweißkopf und das Bauteil aus schweißbarem Material oder dieser Schweißkopf und der Bereich aus schweißbarem Material des Bauteils eine Schweißlinse ausbilden. Vorzugsweise erfolgt dieses mechanische Deformieren des Spitzenbereichs des Schweißhilfsfügeteils mit oder ohne Schaft durch Stauchen des Schweißhilfsfügeteils an einem Amboss oder einem Bauteil aus hochfestem, vorzugsweise schweißbarem, Material, der/das an der Austrittsstelle des Schweißhilfsfügeteils aus dem mindestens einen Bauteil aus nicht oder schlecht schweißbarem Material angeordnet ist. Mithilfe bevorzugter Ambossanordnungen ist die Form und die radiale bzw. seitliche Ausdehnung des Schweißkopfes beeinflussbar, um das nachfolgende Schweißverfahren optimieren zu können. Auf diese Weise bildet der Schweißkopf eine größere Kontaktfläche zum Schweißen, als durch eine Spitze oder Schneide eines bekannten Schweißhilfsfügeteils gesetzt gemäß bekannten Setzverfahren bereitgestellt werden würde. In diesem Zusammenhang ist es bevorzugt, dass Schweißhilfsfügeteil an einem ebenen Amboss oder einem Amboss mit einer senkenähnlichen Oberflächenkontur zu stauchen. Die senkenähnliche Oberflächenkontur bildet im Amboss eine Vertiefung in Setzrichtung des Schweißhilfsfügeteils. Je nach gewünschter Größe und Form des Schweißkopfes ist die Senke unterschiedlich tief ausgebildet und/oder weist eckige oder abgerundete Ränder auf. Zudem ist es bevorzugt, innerhalb der Senke oder auf dem geraden Amboss eine Vertiefung vorzusehen, die in Verlängerung der Längsachse des Schweißhilfsfügeteils angeordnet ist. Diese Vertiefung ist in Ihrem Querschnitt vorzugsweise kleiner als die Hälfte der maximalen Dicke des Spitzenbereichs, weiter bevorzugt kleiner als ein Drittel der maximalen Dicke des Spitzenbereichs. Wird das Schweißhilfsfügeteil während des Setzverfahrens plastisch in diese Vertiefung verformt, entsteht am Schweißkopf oder Schweißpunkt ein stiftähnlicher Fortsatz oder eine Kontaktspitze. Dieser stiftähnlicher Fortsatz oder die Kontaktspitze ist vorzugsweise für ein Bolzenschweißen mit Lichtbogen nutzbar, weil basierend auf den entsprechenden elektrischen Parametern beim Lichtbogenschweißen der Fortsatz oder die Kontaktspitze aufschmilzt und das Zünden des Lichtbogens fördert.

Gemäß einer weiteren vorteilhaften Ausführungsform vorliegender Erfindung wird als Schweißhilfsfügeteil ein Nagel mit einem Kopf und vorzugsweise mit oder ohne einem Schaft eingesetzt. Ein Kopfdurchmesser des Nagels ist größer als ein Schaftdurchmesser oder eine maximale Dicke eines Spitzenbereichs des Nagels, sodass nach Abschluss des Setzvorgangs die dem Bauteil zugewandte Kopfunterseite auf dem mindestens einen Bauteil aufliegt oder von diesem beabstandet angeordnet ist. Sofern der Kopfdurchmesser des Nagels den Schaftdurchmesser oder die maximale Dicke des Spitzenbereichs nicht übersteigt, ist es weiterhin bevorzugt, dass nach Abschluss des Setzverfahrens der Kopf des Nagels bündig mit dem mindestens einen Bauteil abschließt oder an diesem übersteht. Aufgrund dieser unterschiedlichen Anordnungsalternativen für den Kopf des Schweißhilfsfügeteils, egal ob kleiner oder größer im Durchmesser bezogen auf den Schaftdurchmesser, lassen sich zusätzliche Verbindungspunkte für weitere Bauteile bereitstellen. Zudem besteht die Möglichkeit, basierend auf der Materialverdrängung während des nachfolgenden Schweißverfahrens vorteilhafte Verbindungskonfigurationen zwischen dem Bauteil aus nicht oder schlecht schweißbarem Material und dem mindestens einen Bauteil aus schweißbarem Material oder dem mindestens einen Bauteil mit mindestens einem Bereich aus schweißbarem Material herzustellen.

Es ist des Weiteren bevorzugt, dass der durch mechanische Deformation erzeugte Schweißkopf des Schweißhilfsfügeteils mit einer Seite des mindestens einen Bauteils bündig abschließt oder an der Seite des mindestens einen Bauteils mit der Austrittsstelle des Schweißhilfsfügeteils vorsteht. Diese Anordnung des mechanisch deformierten Endes des Schweißhilfsfügeteils gewährleistet, dass für eine spätere verlässliche Schweißverbindung ein ausreichend großer schweißbarer Punkt bzw. eine ausreichend große schweißbare Fläche zur Kontaktierung des aus schweißbarem Material bestehenden mindestens einen zweiten Bauteils vorliegt. Zudem ist es mithilfe der Einstellung eines Überstands des mechanisch deformierten Endes des Schweißhilfsfügeteils an der Seite mit der Austrittsstelle des Schweißhilfsfügeteils möglich, einen gewissen Abstand der miteinander zu verbindenden Bauteile voreinzustellen. Eine weitere Verfahrensalternative sieht vor, dass das überstehende Material des Schweißhilfsfügeteils an der Seite des Kopfes und/oder der deformierten Schaftspitze während des Schweißens zur Ausbildung einer ausreichend großen Schweißlinse und somit einer verlässlichen Verbindung aufgeschmolzen wird.

Vorliegende Erfindung umfasst ebenfalls mindestens ein Bauteil aus einem nicht oder schlecht schweißbarem Material mit einem darin gesetzten Schweißhilfsfügeteil, dessen Spitzenbereich bei einem Setzverfahren in einen Schweißkopf mechanisch plastisch umgeformt worden ist, insbesondere ein Bauteil, in das ein Schweißhilfsfügeteil mit dem Setzverfahren gemäß den oben beschriebenen Alternativen gesetzt worden ist.

Zudem offenbart vorliegende Erfindung ein Schweißverfahren zum Verbinden von mindestens einem ersten Bauteil aus nicht oder schlecht schweißbarem Material mit einem darin gesetzten Schweißhilfsfügeteil mit einem mechanisch deformierten Spitzenbereich des Schweißhilfsfügeteils, insbesondere hergestellt mit dem oben beschriebenen Setzverfahren, und mindestens einem zweiten Bauteil aus schweißbarem Material oder mindestens einem zweiten Bauteil mit mindestens einem Bereich aus schweißbarem Material. Das mindestens eine zweite Bauteil ist beispielsweise ein Trägerbauteil aus Stahl oder einem anderen schweißbaren Metall. Eine weitere Alternative sieht ein zweites Bauteil oder Trägerbauteil aus nicht schweißbarem Material, wie Kunststoff oder CFK vor. Um dieses verschweißen zu können, ist mindestens ein Bereich aus schweißbarem Material vorgesehen, der vorzugsweise aus einem bekannten oder einem erfindungsgemäß bevorzugten Schweißhilfsfügeteil besteht.

Dieses erfindungsgemäße Schweißverfahren weist die folgenden Schritte auf: das in das erste Bauteil gesetzte Schweißhilfsfügeteil wird an einem Schweißkopf in Kontakt mit dem zweiten Bauteil aus schweißbarem Material oder mit einem Bereich aus schweißbarem Material des zweiten Bauteils oder Trägerteils gebracht und das erste und das zweite Bauteil werden über das Schweißhilfsfügeteil im ersten Bauteil miteinander verschweißt. Das Verschweißen erfolgt durch gezielte Wärmeerzeugung im Kontaktbereich des Schweißkopfes des Schweißhilfsfügeteils und des zweiten aus schweißbarem Material bestehenden Bauteils. Gemäß der anderen Alternative besteht das mindestens eine zweite Bauteil aus nicht schweißbarem Material und weist vorzugsweise ein Schweißhilfsfügeteil auf. Wird nun der Schweißkopf des Schweißhilfsfügeteils im ersten Bauteil mit dem einen oder dem anderen axialen Ende des Schweißhilfsfügeteils im zweiten Bauteil in Kontakt gebracht, werden das erste und das zweite Bauteile über die Schweißhilfsfügeteile miteinander verschweißt. Die dafür notwendige Wärme wird beispielsweise durch ein bekanntes Widerstandsschweißverfahren, durch eine induktive Erhitzung des Schweißbereichs, durch Ultraschallanregung der Fügepartner oder durch andere bekannte Schweißverfahren erzeugt. Aufgrund dieses gezielten Wärmeeintrags zwischen Schweißkopf und aus schweißbarem Material bestehendem Bauteil bzw. Bauteil mit Schweißhilfsfügeteil wird das sich kontaktierende Material aufgeschmolzen, sodass sich eine Schweißlinse ausbildet. Nach Abkühlung dieser Schweißlinse bildet sie in diesem Bereich die Verbindung zwischen dem Schweißhilfsfügeteil des ersten Bauteils und dem zweiten Bauteil aus schweißbarem Material oder dem Schweißhilfsfügeteil im zweiten Bauteil. Somit ist das zweite Bauteil aus schweißbarem Material mittelbar über das Schweißhilfsfügeteil mit dem ersten Bauteil aus nicht oder schlecht schweißbarem Material verbunden.

Es ist zudem bevorzugt, zumindest in dem mindestens ersten Bauteil, weiter bevorzugt auch in dem mindestens einen zweiten Bauteil, eine der oben beschriebenen bevorzugten Ausführungsformen des erfindungsgemäßen Schweißhilfsfügeteils zu nutzen.

Zudem umfasst vorliegende Verbindung ein Verbindungsverfahren für mindestens ein Bauteil aus nicht oder schlecht schweißbarem Material mit einem Bauteil aus schweißbarem Material oder mit einem Bauteil umfassend mindestens einen Bereich aus schweißbarem Material mit Hilfe einer Kombination des oben beschriebenen Setzverfahrens und des oben beschriebenen Schweißverfahrens.

Des Weiteren umfasst vorliegende Erfindung mindestens ein erstes Bauteil aus einem nicht oder schlecht schweißbarem Material und mindestens ein zweites Bauteil aus schweißbarem Material oder mindestens ein zweites Bauteil mit mindestens einem Bereich aus schweißbarem Material, insbesondere ein Fahrzeug, die über ein in das mindestens erste Bauteil, vorzugsweise mittels Hochgeschwindigkeitsfügen, gesetztes schweißbares Schweißhilfsfügeteil mit einem durch mechanische Deformation erzeugten Schweißkopf miteinander mittels Schweißen verbunden worden sind, insbesondere mithilfe des oben beschriebenen Verbindungsverfahrens bestehend aus dem erläuterten Setzverfahren und dem erläuterten Schweißverfahren.

### 4. Kurze Beschreibung der begleitenden Zeichnungen

Die vorliegende Erfindung wird unter Bezugnahme auf die begleitende Zeichnung näher erläutert. Es zeigen:
- Figur 1: eine bevorzugte Ausführungsform des Schweißhilfsfügeteils vorliegender Erfindung,
- Figur 2: eine weitere bevorzugte Ausführungsform des Schweißhilfsfügeteils vorliegender Erfindung,
- Figur 3: eine weitere bevorzugte Ausführungsform des Schweißhilfsfügeteils vorliegender Erfindung,
- Figur 4: eine weitere bevorzugte Ausführungsform des Schweißhilfsfügeteils vorliegender Erfindung,
- Figur 5: eine weitere bevorzugte Ausführungsform des Schweißhilfsfügeteils vorliegender Erfindung,
- Figur 6: eine schematische Schnittdarstellung eines bevorzugten Amboss zum Setzen des Schweißhilfsfügeteils vorliegender Erfindung,
- Figur 7: eine bevorzugte Ausführungsform des Amboss zum Setzen des Schweißhilfsfügeteils,
- Figur 8: eine weitere bevorzugte Ausführungsform des Amboss zum Setzen des Schweißhilfsfügeteils,
- Figur 9: eine weitere bevorzugte Ausführungsform des Amboss zum Setzen des Schweißhilfsfügeteils,
- Figur 10: eine weitere bevorzugte Ausführungsform des Amboss zum Setzen des Schweißhilfsfügeteils,
- Figur 11: eine bevorzugte Ausführungsform eines Schweißhilfsfügeteils vorliegender Erfindung, dass in einem Bauteil aus nicht oder schlecht schweißbarem Material gesetzt worden ist,
- Figur 12: eine weitere bevorzugte Ausführungsform eines Schweißhilfsfügeteils, das in einem Bauteil aus nicht oder schlecht schweißbarem Material gesetzt worden ist,
- Figur 13: eine weitere bevorzugte Ausführungsform eines Schweißhilfsfügeteils, das in einem Bauteil aus nicht oder schlecht schweißbarem Material gesetzt worden ist,
- Figur 14: eine weitere bevorzugte Ausführungsform eines Schweißhilfsfügeteils, das in einem Bauteil aus nicht oder schlecht schweißbarem Material gesetzt worden ist,
- Figur 15a-e: eine schematische Darstellung einer bevorzugten Ausführungsform eines Setzens und eines nachfolgenden Verschweißens von zwei Bauteilen mithilfe eines bevorzugten Schweißhilfsfügeteils,
- Figur 16a-e: eine schematische Darstellung eines weiteren Setzverfahrens eines bevorzugten Schweißhilfsfügeteils in zwei Bauteile aus nicht oder schlecht schweißbarem Material und ein nachfolgendes Verschweißen dieses Verbunds mit einem Bauteil aus schweißbarem Material über das Schweißhilfsfügeteil,
- Figur 17a-e: eine schematische Darstellung einer weiteren bevorzugten Ausführungsform des Setzverfahrens des Schweißhilfsfügeteils und des nachfolgenden Schweißverfahrens des gesetzten Schweißhilfsfügeteils vorliegender Erfindung,
- Figur 18a-e: eine schematische Darstellung einer weiteren bevorzugten Ausführungsform des Setzverfahrens eines bevorzugten Schweißhilfsfügeteils und eines nachfolgenden Schweißverfahrens basierend auf dem gesetzten Schweißhilfsfügeteil,
- Figur 19a-f: eine schematische Darstellung einer weiteren bevorzugten Ausführungsform des Setzverfahrens eines bevorzugten Schweißhilfsfügeteils und eines nachfolgenden Schweißverfahrens basierend auf dem gesetzten Schweißhilfsfügeteil,
- Figur 20: eine schematische Darstellung eines Schweißverfahrens für ein gesetztes erfindungsgemäß bevorzugtes Schweißhilfsfügeteils mit zwei Bauteilen und einer dazwischen liegenden Klebstoffschicht,
- Figur 21: eine schematische Darstellung eines bevorzugten Schweißverfahrens von mehreren Bauteilen und eines darin gesetzten erfindungsgemäß bevorzugten Schweißhilfsfügteils, wobei zwischen den Bauteilen jeweils Klebstoffschichten angeordnet sind,

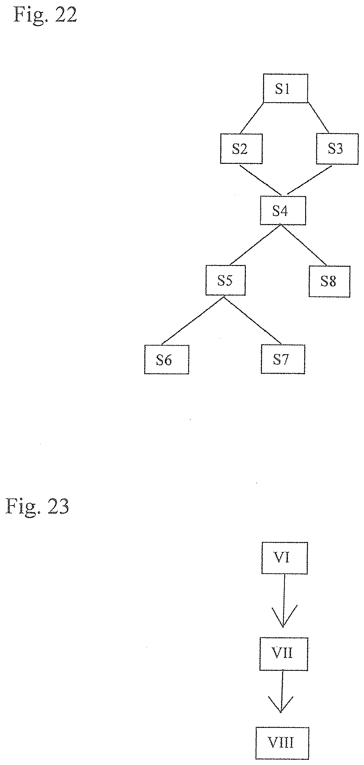

- Figur 22: ein Flussdiagramm zu einem bevorzugten Setzverfahren des Schweißhilfsfügeteils,
- Figur 23: ein Flussdiagramm zu einem bevorzugten Schweißverfahren des Schweißhilfsfügeteils und

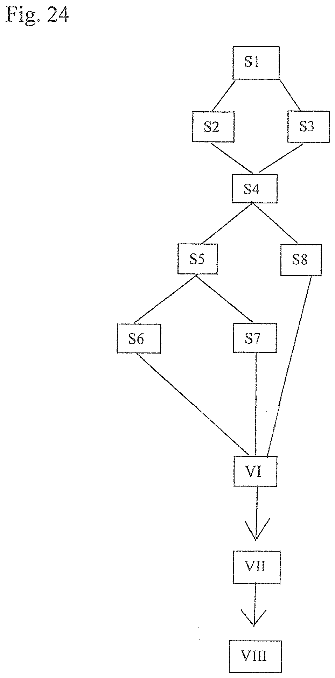

- Figur 24: ein Flussdiagramm für ein bevorzugtes Verbindungsverfahren von mindestens einem Bauteil aus nicht oder schlecht schweißbarem Material und mindestens einem Bauteil aus schweißbarem Material mithilfe eines bevorzugten erfindungsgemäßen Schweißhilfsfügeteils, das die Verfahrensabschnitte Setzen des Schweißhilfsfügeteils und Schweißen des Schweißhilfsfügeteils umfasst.

### 5. Detaillierte Beschreibung der bevorzugten Ausführungsformen

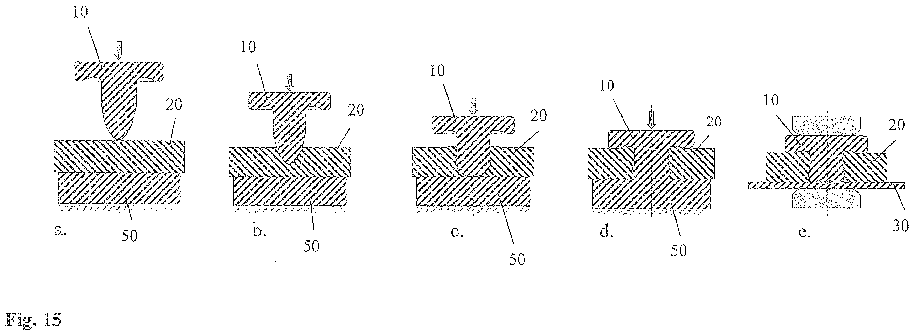

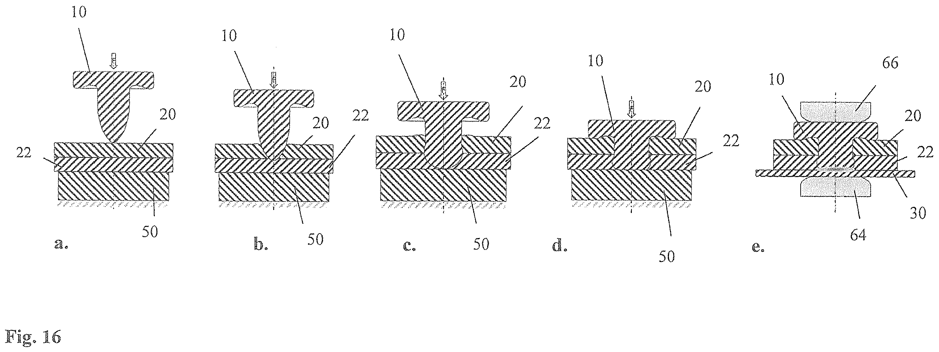

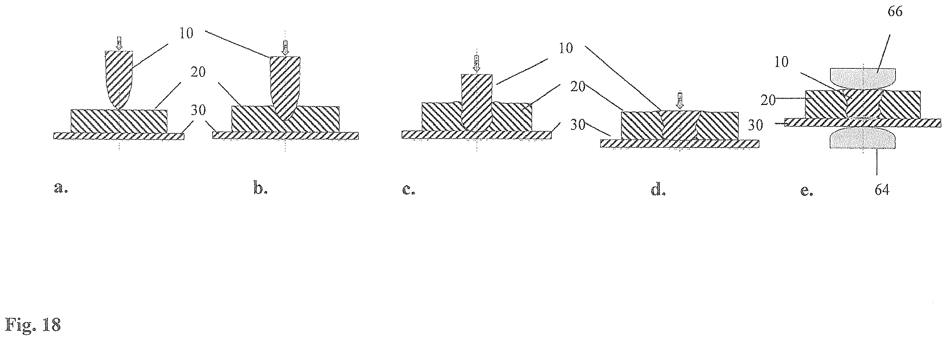

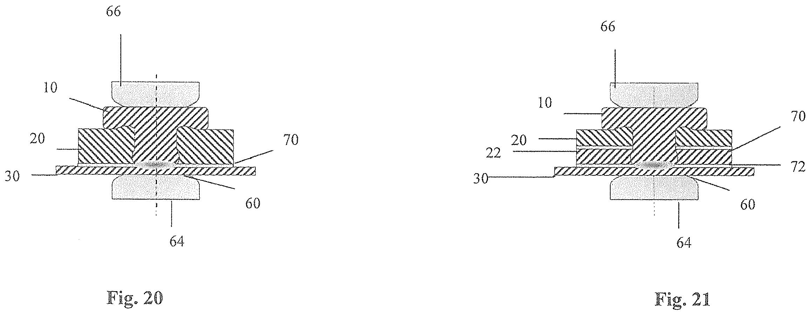

Die vorliegende Erfindung betrifft das Herstellen einer verlässlichen Verbindung mit hoher Lebensdauer zwischen mindestens einem Bauteil 20 aus nicht oder schlecht schweißbarem Material und mindestens einem Bauteil 30 aus schweißbarem Material mittels Schweißen (vgl. Fig. 15-21). Die Materialien der zu verbindenden Bauteile 20 und 30 sind nicht schweißkompatibel zueinander, so dass sie mittelbar über ein erfindungsgemäß bevorzugtes Schweißhilfsfügeteil 10 miteinander verschweißt werden. Zu den schweißbaren Materialien zählen Stähle und hochfeste Stähle, wie beispielsweise 22MnB5 (CEV=0,5), B27 (CEV=0,54), 32MnCrB6 (CEV=0,6), aus denen u. a. Rahmenstrukturen im Fahrzeugbau gefertigt werden. Unter den nicht oder schlecht schweißbaren Materialien werden Materialien verstanden, die sich ohne konstruktive Hilfsmittel nicht oder nur schlecht mit anderen Bauteilen verschweißen lassen. Dazu gehören auch schweißbare Materialien, die jedoch in ihrer Materialkombination zu dem Material eines zu verbindenden Bauteil keine oder nur eine geringe Schweißkompatibilität aufweisen. Das bedeutet, dass die allgemein schweißbaren Materialien sich gerade nicht oder nur schlecht bzw. schwer untereinander verschweißen lassen. Zu diesen Werkstoffen zählen beispielsweise Kunststoffe, faserverstärkte Kunststoffe, Aluminium, Gusseisen oder andere Gusslegierungen sowie Stähle, wie beispielsweise Federstähle mit einem CEV>0,8.

Um das mindestens eine Bauteil 20 aus nicht oder schlecht schweißbarem Material überhaupt mittels Schweißen verbinden zu können, wird es mit dem Schweißhilfsfügeteil 10 versehen. Dieses Schweißhilfsfügeteil 10 besteht aus schweißbarem Material und wird in dem mindestens einen Bauteil 20 verankert. Aufgrund seines Materials ist das Schweißhilfsfügeteil 10 nachfolgend mit dem mindestens einen Bauteil 30 aus schweißbarem Material mittels Schweißen verbindbar. Auf diese Weise wird eine verlässliche Verbindung zwischen den Bauteilen 20, 30 mithilfe des Schweißhilfsfügeteils 10 erzeugt.

Es ist ebenfalls bevorzugt, das mindestens eine Bauteil 30 aus nicht schweißbarem Material bereitzustellen. In diesem Fall umfasst das mindestens eine Bauteil 30 mindestens einen Bereich aus schweißbarem Material, der vorzugsweise durch ein bekanntes Schweißhilfsfügeteil oder ein erfindungsgemäß bevorzugtes Schweißhilfsfügeteil 10 gebildet wird (nicht gezeigt). Um eine Verbindung zwischen dem mindestens einen Bauteil 20 und dem mindestens einen Bauteil 30 herzustellen, werden bevorzugt die jeweils in beiden Bauteilen 20, 30 enthaltenen Schweißhilfsfügeteile miteinander verschweißt, vorzugsweise mittels Widerstandsschweißen oder Lichtbogenschweißen. Dieses Verschweißen der beiden Schweißhilfsfügeteile und somit der beiden Bauteile 20, 30 erfolgt derart, dass die Schweißköpfe oder Köpfe der beiden Schweißhilfsfügeteile miteinander in Kontakt gebracht werden und dann verschweißt werden. Alternativ dazu wird ein Kopf eines Schweißhilfsfügeteils mit dem Schweißkopf des anderen Schweißhilfsfügeteils in Kontakt gebracht und dann miteinander verschweißt.

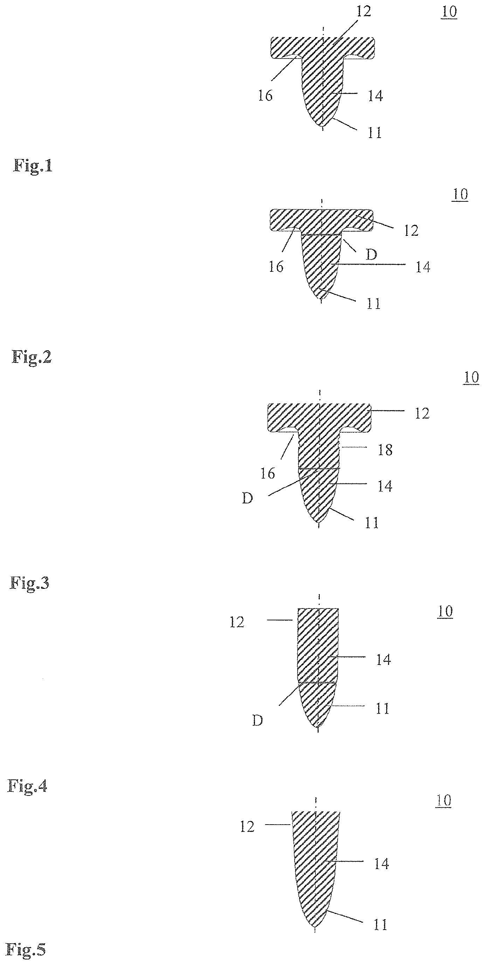

Bevorzugte Ausführungsformen des erfindungsgemäßen Schweißhilfsfügeteils 10 zeigen die Fig. 1-5. Das Schweißhilfsfügeteil 10 umfasst einen Kopf 12 und vorzugsweise einen Schaft 14. Zudem umfasst das Schweißhilfsfügeteil 10 einen Spitzenbereich 11, der sich in Längsrichtung des Schweißhilfsfügeteils 10 erstreckt. Der Spitzenbereich erstreckt sich zwischen einer Spitze des Schweißhilfsfügeteils 10 und einem Punkt , an dem der Spitzenbereich seine maximale Dicke D erreicht hat (vgl. Fig. 2 bis 4).

Der Spitzenbereich 11 hat gemäß unterschiedlicher Ausführungsformen vorliegender Erfindung unterschiedliche Formen. In einer Seitenansicht ist der Spitzenbereich kegelförmig oder pyramidenförmig oder parabelförmig ausgebildet. Zudem ist es bevorzugt, die zur Längsachse des Spitzenbereichs symmetrische Mantelfläche konvex oder konkav oder polygonal auszubilden. Es versteht sich, dass die oben beschriebenen Ausführungsformen des Spitzenbereichs 11 in Kombination mit dem Kopf 12 oder in Kombination mit dem Kopf 12 und dem Schaft 14 einsetzbar sind.

Der Kopf 12 des Schweißhilfsfügeteils 10 besitzt einen Kopfdurchmesser, der entweder größer oder gleich einem Durchmesser des Schafts 14 oder der maximalen Dicke D des Spitzenbereichs 11 ist. Gemäß den Ausführungsformen der Fig. 1 und 2 ist der Kopfdurchmesser größer als der Schaftdurchmesser oder der maximale Dicke D. Nachdem das Schweißhilfsfügeteil 10 in das mindestens eine Bauteil 20 aus nicht oder schlecht schweißbarem Material gesetzt worden ist, liegt die dem Schaft 14 oder dem Spitzenbereich 11 zugewandte Unterseite des Kopfes 12 auf dem Bauteil 20 auf oder ist von diesem beabstandet. Das bedeutet, dass das Schweißhilfsfügeteil 10 mit einem gewissen Kopfüberstand in das mindestens eine Bauteil 20 gesetzt worden ist.

Die Kopfunterseite des Kopfes 12 umfasst bevorzugt eine ringförmig um den Schaft 14 oder den Spitzenbereich 11 umlaufende Unterkopfnut 16. Diese Unterkopfnut 16 dient der Materialaufnahme für verdrängtes Material aus dem mindestens einen Bauteil 20, dass zum Kopf 12 benachbart ist.

Ebenfalls bevorzugt weist die Kopfunterseite des Kopfes 12 ergänzend zur oder anstelle der Unterkopfnut 16 in radialer Richtung verlaufende Rippen und/oder Vertiefungen bzw. Rillen auf. Die Vertiefungen bzw. Rillen (nicht gezeigt) und die Rippen (nicht gezeigt) definieren Hohlräume, in denen verdrängtes Material aus dem Bauteil 20 aufnehmbar ist. Diese Hohlräume sorgen für eine optimale Auflage des Kopfes 12 auf dem Bauteil 20 trotz Materialverdrängung aus dem Bauteil 20. Zudem bilden diese Hohlräume einen Hinterschnitt gegen ein Verdrehen des Schweißhilfsfügeteils 10 in dem mindestens einen Bauteil 20.

Gemäß weiterer bevorzugter Ausführungsformen des erfindungsgemäßen Schweißhilfsfügeteils 10 ist der Kopfdurchmesser des Kopfes 12 gleich dem Schaftdurchmesser des Schafts 14 oder der maximalen Dicke D des Spitzenbereichs, wie es in den Fig. 4 und 5 beispielgebend dargestellt ist.

Für die verschiedenen Ausführungsformen des Schweißhilfsfügeteils 10 ist es zudem bevorzugt, den Schaft 14 zylindrisch (vgl. Fig. 1, 3, 4), kegelig (vgl. Fig. 2 und 5) sowie mit oder ohne äußere Rändelung 18 (vgl. Fig. 3) bereitzustellen.

Gemäß einer weiteren bevorzugten Ausführungsform vorliegender Erfindung besitzt eine Spitze des Schafts 14 vorzugsweise eine ogivale Form mit einem Ogivalitätsfaktor aus dem Bereich von 1 bis 20, weiter bevorzugt mit einem Ogivalitätsfaktor aus dem Bereich von 3 - 5. Es ist ebenfalls bevorzugt, dass die Spitze in ihrem Längsschnitt eine Parabelform aufweist oder kegelförmig oder pyramidenförmig ausgestaltet ist. Gemäß einer weiteren bevorzugten Ausgestaltung schließt die Mantelfläche des Spitzenbereichs 11 mit der Längsachse des Schweißhilfsfügeteils 10einen Winkel im Bereich von 5 ° bis 60 ° ein.

Das oben beschriebene Schweißhilfsfügeteil 10 wird zum Verbinden des mindestens einen Bauteils 20 aus nicht oder schlecht schweißbarem Material mit dem mindestens einen Bauteil 30 aus schweißbarem Material verwendet. Alternativ dazu ist es ebenfalls bevorzugt, das mindestens eine Bauteil 30 aus nicht schweißbarem Material mit einem Schweißhilfsfügeteil bereitzustellen, so dass das mindestens eine Bauteil 20 und das mindestens eine Bauteil 30 über ihre Schweißhilfsfügeteile miteinander verbunden werden.

Dieses Verbindungsverfahren setzt sich aus einem Setzverfahren und einem Schweißverfahren zusammen, die örtlich und zeitlich getrennt voneinander oder aber in einer Abfolge an einem Ort durchführbar sind. Das Setzverfahren umfasst dabei das Setzen bzw. Eintreiben (S1) des Schweißhilfsfügeteils 10 in das mindestens eine erste Bauteil 20, wobei dieses mindestens eine erste Bauteil 20 nicht vorgelocht ist. Das Schweißhilfsfügeteil 10 wird derart in das mindestens eine erste Bauteil 20 eingetrieben, dass kein Abfallmaterial, wie beispielsweise ein Stanz- oder Abfallbutzen oder dergleichen entsteht. Dies verhindert, dass das Abfallmaterial abgeführt werden muss. Zudem ist dadurch vermieden, dass sich das Abfallmaterial an oder nahe einem Schweißpunkt oder Schweißkopf sammelt und sich während des Schweißens negativ auf die herzustellende Schweißverbindung auswirkt.

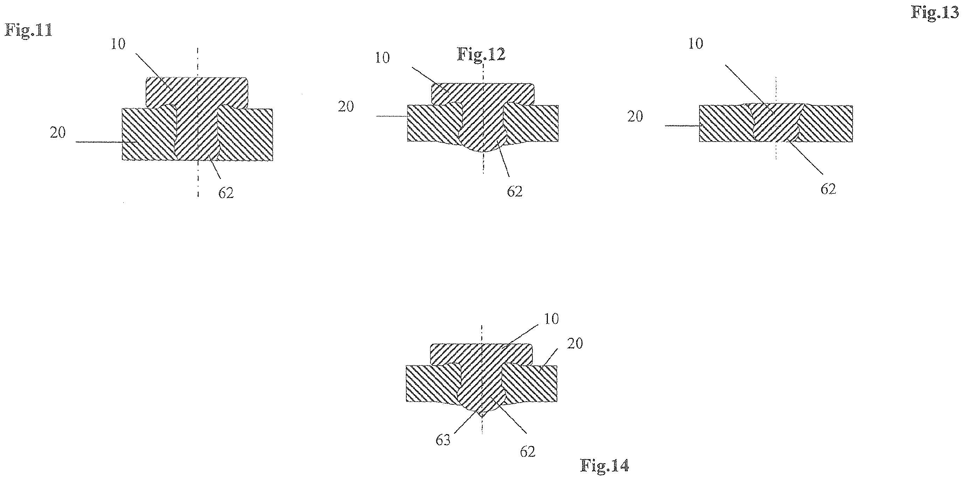

Während des Eintreiben (S1) ist die dem Schweißhilfsfügeteil 10 zugeführte Fügeenergie derart einstellbar, dass das Schweißhilfsfügeteil 10 mit (S3, Fig. 14) oder ohne Kopfüberstand (S3, vgl. Fig. 15, 16, 18) eingetrieben wird. Das Eintreiben mit und ohne Kopfüberstand ist für das Schweißhilfsfügeteil 10 mit und ohne Kopf gleichermaßen anwendbar. Der Kopfüberstand gewährleistet vorzugsweise beim späteren Schweißen (siehe unten) die Zufuhr von zusätzlichem Material zur Schweißstelle.

Die Fig. 15-19 veranschaulichen schematisch das bevorzugte Eintreiben (S1) des Schweißhilfsfügeteils 10 in ein oder mehrere Bauteile 20, 22 aus nicht oder schlecht schweißbarem Material. Während des Eintreibens des Schweißhilfsfügeteils 10 stützt sich das mindestens eine erste Bauteil 20, 22 an einer stabilen Fläche ab, die die entsprechende Gegenkraft zum Eintreiben liefert. Diese stabile Fläche wird durch einen Amboss 50 oder das mindestens eine zweite Bauteil 30 gebildet, das in diesem Fall aus einem Material besteht, das eine höhere Festigkeit als das Schweißhilfsfügeteil 10 aufweist. Auf diese Weise ist gewährleistet, dass sich das zweite Bauteil 30 während des Setzvorgangs nicht verformt.

Aufgrund dieser stabilen oder nicht verformbaren Fläche gebildet durch den Amboss 50 oder das mindestens eine zweite Bauteil 30 wird das Schweißhilfsfügeteil 10 an einer Austrittsstelle des Schweißhilfsfügeteils 10 aus dem mindestens einen ersten Bauteil 20; 22 deformiert (S4). Während der Deformation wird die Spitze des Schweißhilfsfügeteils 10 in einen Schweißkopf 62 verformt, der eine spätere beim Schweißen vorteilhafte Kontaktfläche bereitstellt. Gemäß der Erfindung wird das Schweißhilfsfügeteil 10 an dem Amboss 50 (S8) oder dem mindestens einen zweiten Bauteil 30 (S5) gestaucht und dadurch plastisch verformt.

Da der Amboss 50 oder das mindestens eine zweite Bauteil 30 vorzugsweise bündig an dem mindestens einen ersten Bauteil 20; 22 anliegt, entsteht durch dieses Stauchen ein Schweißkopf 62, der bündig mit der dem Amboss 50 (S6) oder dem zweiten Bauteil 30 zugewandten Seite des ersten Bauteils 20, 22 abschließt (vgl. Fig. 11, 13). Es ist ebenfalls bevorzugt, das Schweißhilfsfügeteil 10 derart einzutreiben, dass der durch mechanisch plastische Deformation erzeugte Schweißkopf 62 an der dem Kopf 12 abgewandten Seite des mindestens einen ersten Bauteils 20; 22 übersteht, wie es gemäß einer bevorzugten Ausführungsform in Fig. 12 veranschaulicht ist. Auf diese Weise wird zusätzliches Material des Schweißhilfsfügeteils 10 für das spätere Schweißen bereitgestellt, was bei einer bündigen Anordnung des Setzkopfes 62 nicht vorhanden wäre. Das zusätzliche Material des überstehenden Schweißkopfes 62 oder des überstehenden Kopfes 12 (siehe oben) wird nämlich vorzugsweise während des Schweißens in die Schweißzone und im Speziellen in die Schweißlinse 60 (siehe unten) gedrückt, sodass dort zusätzliches Material zum Herstellen einer verlässlichen Schweißverbindung zur Verfügung steht.

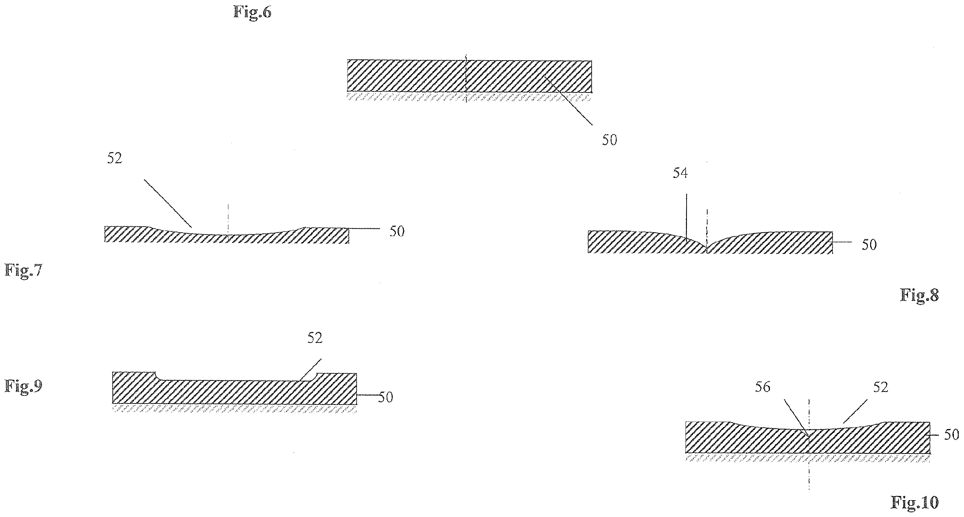

Der Schweißkopf 62 mit Überstand bzw. mit nichtbündigem Abschluss wird bevorzugt auch dadurch erzeugt, dass das Schweißhilfsfügeteil 10 gegen einen Amboss 50 mit senkenähnlicher Vertiefung 52, 54 in Eintreibrichtung eingetrieben wird. Bevorzugte Ausführungsformen eines derartigen Amboss 50 zeigen die Fig. 7, 8, 9 und 10.

In Fig. 7 ist eine flächige Senke 52 zu erkennen, während gemäß Fig. 8 eine Senke 54 geringer Breite und größerer Tiefe gesehen im Querschnitt des Amboss 50 genutzt wird. Der Amboss 50 in Fig. 9 umfasst eine in Setzrichtung des Schweißhilfsfügeteils 10 angeordnete rechteckige Ausnehmung mit im Querschnitt des Amboss 50 gesehen abgerundeten Randbereichen. Der bevorzugte Amboss 50 gemäß Fig. 10 weißt eine ovale Ausnehmung in Eintreibrichtung auf. Zudem ist mittig innerhalb der Ausnehmung 52 des Amboss 50 in Fig. 10 eine weitere Vertiefung 56 vorgesehen. Diese Vertiefung 56 läuft vorzugsweise spitz aus. Während des Setzens des Schweißhilfsfügeteils 10 in das mindestens eine Bauteil 20; 22 und gegen den Amboss 50 gemäß Fig. 10, verformt sich der Spitzenbereich 11 des Schweißhilfsfügeteils 10 in die Ausnehmung 52 und die Vertiefung 56 des Amboss 50. Durch die plastische Verformung des Schweißhilfsfügeteils 10 in die Vertiefung 56 entsteht am Schweißkopf 62 eine für das Lichtbogenschweißen vorteilhafte geometrischen Spitzenform 63. Ein entsprechend gesetztes Schweißhilfsfügeteil 10 zeigt Fig. 14. In Fig. 14 ist deutlich die geometrische Spitzenform 63 am Schweißkopf 62 zu erkennen. Bei Anlegen bekannter elektrischer Parameter beim späteren Schweißen entsteht an dieser geometrischen Spitzenform 63 ein Lichtbogen, so dass das Bauteil 20 mittels Bolzen-Lichtbogenschweißen mit dem Bauteil 30 direkt oder über ein dort eingebrachtes Hilfsfügeteil verschweißbar ist.

Wie man anhand der Fig. 15-17 erkennen kann, wird während des Deformierens (S4) des Schweißhilfsfügeteils 10 das Material des Schweißhilfsfügeteils 10 in radialer Richtung bezogen auf den Schaft 14 verdrängt, weil der Amboss 50 oder das zweite Bauteil 30 eine axiale Materialverdrängung in Eintreibrichtung einschränkt oder verhindert. Aufgrund dieser radialen Materialverdrängung und der Ausbildung des Schweißkopfes 62 kommt es zu einem Formschluss zwischen dem mindestens einen Bauteil 20; 22 und dem Schweißhilfsfügeteil 10, wie die Fig. 11-13 zeigen. Der Kopf 12 und der Setzkopf 62 bilden nämlich bevorzugt einen axialen Hinterschnitt, der die Verbindung zwischen Schweißhilfsfügeteils 10 und dem mindestens einen Bauteil 20; 22 unterstützt. Des Weiteren sorgt die radiale Materialverdrängung dafür, dass sich am Schweißkopf 62 annähernd kein Material des Bauteils 20; 22 mehr befindet, sodass der Schweißkopf 62 eine saubere Kontaktfläche zum Schweißen bereitstellt.

Das Eintreiben (S1) des Schweißhilfsfügeteils 10 erfolgt durch einen Stempel (nicht gezeigt), der mithilfe eines hydraulischen, elektromagnetischen, elektrischen, pneumatischen oder gasbetriebenen Antriebs bewegt wird. Gemäß einer bevorzugten Ausführungsform vorliegender Erfindung wird das Schweißhilfsfügeteil 10 mithilfe einer impulsförmigen Kraft eingetrieben, die das Schweißhilfsfügeteil 10 auf eine Geschwindigkeit von mindestens 5 m/s, vorzugsweise mindestens 10 m/s und noch mehr bevorzugt mindestens 20 m/s, beschleunigt. Ein derartiges Eintreib- bzw. Setzverfahren ist in DE 10 2006 002 238 beschrieben, worauf an dieser Stelle Bezug genommen wird. Zudem sind die oben genannten Geschwindigkeiten des Schweißhilfsfügeteils 10 bevorzugt.

Nach Abschluss des Setzverfahrens liegt das mindestens eine Bauteil 20; 22 aus nicht oder schlecht schweißbarem Material mit einem Schweißhilfsfügeteil 10 vor, dass einen bündig oder überstehend angeordneten Schweißkopf 62 bereitstellt. Zudem steht auch der Kopf 12 vom Bauteil 20; 22 ab oder liegt an diesem an. Da das mindestens eine erste Bauteil 20; 22 und das Schweißhilfsfügeteil 10 verlässlich miteinander verbunden sind, ist es bevorzugt, diesen Verbund zu transportieren und andernorts zu verschweißen. In gleicher Weise kann sich auch das folgende Schweißverfahren an das Setzverfahren vor Ort anschließen.

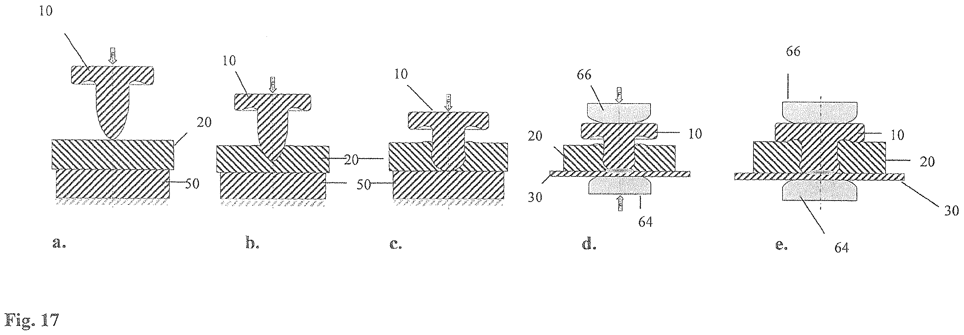

Um den Verbund aus dem mindestens einen Bauteil 20; 22 und Schweißhilfsfügeteil 10 mit dem mindestens einen Bauteil 30 zu verschweißen, werden an den Kopf 12 des Schweißhilfsfügeteils 10 und das mindestens eine zweite Bauteil 30 jeweils eine Schweißelektrode 64, 66 angelegt (vgl. Fig. 15-18d, e, 20, 21). Zuvor wurden das im Bauteil 20; 22 angeordnete Schweißhilfsfügeteil 10 und das mindestens eine Bauteil 30 derart angeordnet, dass sie in Kontakt zueinander stehen (VI). Besteht das zweite Bauteil 30 aus einem nicht schweißbaren Material, wird ein Bereich aus schweißbarem Material im Bauteil 30, vorzugsweise ein Schweißhilfsfügeteil, mit dem Schweißhilfsfügeteil 10 im Bauteil 20 in Kontakt gebracht. Da das Schweißhilfsfügeteil 10 und das mindestens eine zweite Bauteil 30 oder beide Schweißhilfsfügeteile elektrisch leitend sind, erzeugen die Schweißelektroden 64, 66 einen Stromfluss zwischen den Schweißelektroden 64, 66 (VII). Gleichzeitig drücken die Schweißelektroden 64, 66 bevorzugt mit einer definierten Kraft aufeinander und somit auf das Schweißhilfsfügeteil 10 und das mindestens eine zweite Bauteil 30. Durch den Stromfluss wird Wärme erzeugt, sodass sich am Schweißkopf 62 eine Schweißlinse 60 ausbildet. Im Bereich der Schweißlinse 60 wird das Material des Schweißhilfsfügeteils 10 und des zweiten Bauteils 30 aufgeschmolzen. In Abhängigkeit von der Druckkraft der Schweißelektroden 64, 66 wird bei einem Kopfüberstand (vgl. Fig. 17d) oder bei einem Überstand des Schweißkopfes 62 (vgl. Fig. 12) das überstehende Material des Schweißhilfsfügeteils 10 in die Schweißzone mit Schweißlinse 60 gedrückt. Auf diese Weise dient das zusätzlich zugeführte Material des Schweißhilfsfügeteils 10 dem Herstellen der Schweißverbindung. Nach ausreichendem Verschweißen wird der Strom durch die Schweißelektroden 64, 66 abgeschaltet und die Schweißverbindung unter optionaler Krafteinwirkung der Schweißelektroden 64, 66 abgekühlt.

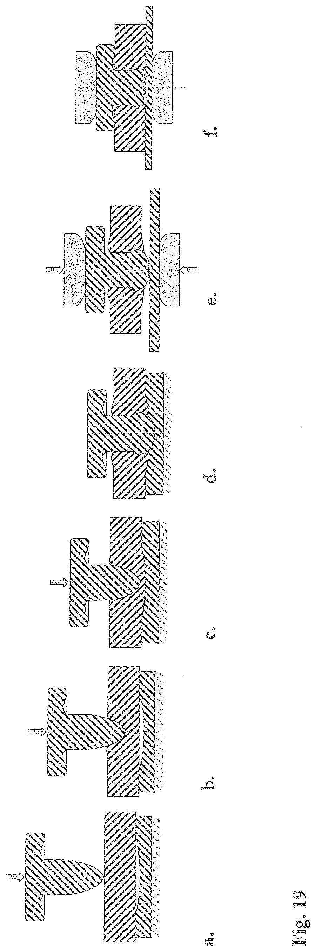

Fig. 19 a bis f zeigt das Setzen des Schweißhilfsfügeteils 10 gegen einen Amboss 50 mit ovaler Ausnehmung 52. Während des Setzvorgangs verformt sich das Schweißhilfsfügeteil 10 in die Ausnehmung 52 und bildet dadurch einen über das Bauteil 20 hinausragenden Schweißkopf 62. Gleichzeitig wurde das Schweißhilfsfügeteil 10 mit Kopfüberstand gesetzt, so dass beim Verschweißen mit dem Bauteil 30 über die Elektroden 64, 66 zusätzliches Material in die Schweißzone/Schweißlinse 60 gedrückt werden kann (vgl. Fig. 19 e). Wie man anhand der Fig. 19 f erkennen kann, liegen nach dem Schweißen der Kopf 12 bündig am Bauteil 20 und das Bauteil 20 bündig am Bauteil 30 an. Somit findet aufgrund des Überstands des Schweißkopfs 62 und des Kopfs 12 vorzugsweise ein Widerstandsbolzenschweißen statt, während man bei einem Widerstandsschweißen ohne Überstand an Kopf 12 und Schweißkopf 62 vorzugsweise von einem Widerstandspunktschweißen ausgeht. Weißt der Schweißkopf vorzugsweise noch die geometrische Spitzenform 63 auf, wird vorzugsweise ein Bolzenschweißen mit Lichtbogen eingesetzt.

Um den Verbund aus dem mindestens einen Bauteil 20 und dem mindestens einen Bauteil 30 zu unterstützen, wird vorzugsweise vor dem Schweißen eine Klebstoffschicht 70, 72 zwischen den Bauteilen 20, 30 oder 22, 30 angeordnet. In gleicher Weise ist es auch bevorzugt, vor dem Eintreiben des Schweißhilfsfügeteils 10 eine Klebstoffschicht 70 zwischen einer Mehrzahl von ersten Bauteilen 20, 22 anzuordnen.

Nach Abschluss des Schweißverfahrens liegt ein Verbund aus mindestens einem Bauteil 20 aus einem nicht oder schlecht schweißbarem Material und mindestens einem zweiten Bauteil 30 aus schweißbarem Material vorzugsweise in Form eines Fahrzeugteils oder eines Fahrzeugs vor. Das oben genannte Bauteil 20 wurde mithilfe eines Setzverfahrens, vorzugsweise eines Hochgeschwindigkeitsfügens, mit einem schweißbaren Schweißhilfsfügeteil 10 ausgestattet, an dem während des Setzverfahrens durch mechanische Deformation ein Schweißkopf 62 erzeugt worden ist. Da das Schweißhilfsfügeteil 10 mit Schweißkopf 62 nur in das mindestens eine erste Bauteil 20 aus einem nicht oder schlecht schweißbarem Material gesetzt worden ist, wurde dann mittels Schweißen eine Verbindung zwischen dem zweiten Bauteil 30 aus schweißbarem Material und dem Schweißhilfsfügeteil 10 hergestellt. Da das Schweißhilfsfügeteil 10 fest mit dem ersten Bauteil 20 verbunden ist, liegt auf diese Weise auch eine verlässliche Verbindung zwischen dem ersten Bauteil 20 und dem zweiten Bauteil 30 vor. Alternativ dazu wurde das Bauteil 20 mit gesetztem Schweißhilfsfügeteil 10 mit einem Bauteil 30 verschweißt, das aus schlecht schweißbarem Material besteht. Zu diesem Zweck wurden im Bauteil 30 mindestens ein Schweißhilfsfügeteil 10 oder ein verschweißbares Fügeteil aus dem Stand der Technik gesetzt und nachfolgend mit dem Setzkopf 62 des Schweißhilfsfügeteils 10 im Bauteil 20 verschweißt.

In Abwandlung des oben beschriebenen Verbindungsverfahrens bestehend aus dem Setzvorgang eines Schweißhilfsfügeteils und einem mittelbaren oder unmittelbaren Verschweißen des Schweißhilfsfügeteils mit einem weiteren Bauteil ist ebenfalls folgendes Vorgehen denkbar. Zunächst wird ein Fügeelement mit einem Kopf in das Bauteil aus nicht schweißbarem Material gesetzt und über einen Schließkopf gehalten. Der Schließkopf bildet sich beispielsweise beim Setzen des Fügeelements gegen einen Amboss aus. Der bereits vor dem Setzvorgang am Fügeelement vorhandene Setzkopf dient gleichzeitig als Schweißkopf bei einem Widerstandsschweißen mit dem weiteren Bauteil aus schweißbarem Material oder dem weiteren Bauteil mit einem zusätzlichen Schweißhilfsfügeteil aus verschweißbarem Material.

## Patentansprüche

1. Schweißhilfsfügeteil (10) in Form eines Bolzens (10) zum Fügen in mindestens ein Bauteil (20; 22) und Herstellen einer Schweißverbindung aus einer Mehrzahl von Bauteilen, vorzugsweise mit mindestens einem Bauteil (20; 22) aus einem nicht oder schlecht schweißbarem Material, das die folgenden Merkmale aufweist:
a. einen Kopf (12), einen Spitzenbereich (11), der sich in Längsrichtung des Schweißhilfsfügeteils (10) erstreckt und eine maximale Dicke quer zur Längsrichtung aufweist, und vorzugsweise einen Schaft (14), **dadurch gekennzeichnet, dass**
b. der Bolzen (10) aus einem schweißbaren Stahl mit einem Kohlenstoffäquivalent CEV von 0,2 bis 0,8 besteht, der während eines Setzverfahrens des Schweißhilfsfügeteils plastisch verformbar ist, so dass der Spitzenbereich (11) des Schweißhilfsfügeteils (10) zumindest teilweise in einen Schweißkopf oder Schweißpunkt (62) stauchbar ist.

2. Schweißhilfsfügeteil (10) gemäß Anspruch 1, dessen Kopf (12) einen Durchmesser aufweist, der größer ist als die maximale Dicke des Spitzenbereichs (11).

3. Schweißhilfsfügeteil (10) gemäß Anspruch 1 oder 2, dessen Kopf (12) an einer dem Spitzenbereich (11) zugewandten Seite eine Ringnut (16) zur Aufnahme einer Materialverformung eines zum Kopf benachbarten Bauteils (20; 22) aufweist.

4. Schweißhilfsfügeteil (10) gemäß einem der vorhergehenden Ansprüche, dessen Kopf (12) an einer dem Spitzenbereich (11) zugewandten Seite in radialer Richtung verlaufende Rillen oder Rippen aufweist, um Aufnahmeräume zur Aufnahme einer Materialverformung eines zum Kopf benachbarten Bauteils (20; 22) bereitzustellen.

5. Schweißhilfsfügeteil (10) gemäß Anspruch 1, dessen Kopf (12) einen Durchmesser aufweist, der gleich einem Durchmesser der maximalen Dicke des Spitzenbereichs (11) ist.

6. Schweißhilfsfügeteil (10) gemäß einem der vorhergehenden Ansprüche, das einen Schaft (12) mit einer zylinderähnlichen oder zumindest teilweise kegligen Form aufweist.

7. Schweißhilfsfügeteil (10) gemäß Anspruch 6, dessen Schaft (12) eine Rändelung oder Profilierung aufweist.

8. Schweißhilfsfügeteil (10) gemäß einem der vorhergehenden Ansprüche, dessen Spitzenbereich (11) eine ogivale Spitze mit einem Ogivalitätsfaktor aus einem Bereich von 1 bis 10 aufweist.

9. Schweißhilfsfügeteil (10) gemäß einem der vorhergehenden Ansprüche 1 bis 7, dessen Spitzenbereich (11) eine kegelförmige oder eine pyramidenförmige Ausgestaltung aufweist.

10. Verwendung eines Bolzens (10) gemäß einem der Ansprüche 1-9 als Schweißhilfsfügeteil.

11. Setzverfahren für ein Schweißhilfsfügeteil (10), insbesondere ein Schweißhilfsfügeteil (10) gemäß einem der Ansprüche 1-9, in mindestens einem Bauteil (20; 22) aus einem nicht oder schlecht schweißbarem Material ohne Vorlochen des mindestens einen Bauteils (20; 22), **dadurch gekennzeichnet, dass** das Setzverfahren die folgenden Schritte aufweist:
a. Eintreiben (S1) des Schweißhilfsfügeteils (10) in das mindestens eine Bauteil (20; 22) mithilfe einer impulsförmigen Kraft, die das Schweißhilfsfügeteil (10) auf eine Geschwindigkeit von mindestens 5 m/s beschleunigt; wobei
b. kein Abfallmaterial, insbesondere kein Setzbutzen, von dem mindestens einen Bauteil getrennt wird, und
c. Stauchen (S4) des Schweißhilfsfügeteils an einer Austrittsstelle des Schweißhilfsfügeteils (10) aus dem mindestens einen Bauteil (20; 22) an einem Amboss (50) oder einem Trägerbauteil (30) aus hochfestem schweißbarem Material, der/das an der Austrittsstelle des Schweißhilfsfügeteils (10) aus dem mindestens einen Bauteil (20; 22) angeordnet ist, während des Setzens derart, dass ein Spitzenbereich des Schweißhilfsfügeteils (10) zumindest teilweise in einen Schweißkopf oder Schweißpunkt (62) umgeformt wird.

12. Setzverfahren gemäß Anspruch 11, wobei das Schweißhilfsftigeteil (10) an einem ebenen Amboss (50) oder einem Amboss (50) mit einer senkenähnlichen Oberflächenkontur (52; 54; 56) gestaucht wird (S6; S7).

13. Setzverfahren gemäß Anspruch 11 oder 12, wobei das Schweißhilfsfügeteil (10) ein Bolzen mit einem Kopf (12) und zumindest einem Spitzenbereich (11) ist, bei dem ein Kopfdurchmesser größer als eine maximale Dicke des Spitzenbereichs (11) ist, und wobei der Bolzen nach Abschluss des Setzverfahrens mit einer dem mindestens einen Bauteil (20; 22) zugewandten Kopfunterseite auf dem mindestens einen Bauteil (20; 22) aufliegt oder von diesem beabstandet ist (S2; S3).

14. Setzverfahren gemäß Anspruch 11 oder 12, wobei das Schweißhilfsfügeteil (10) ein Bolzen mit einem Kopf (12) ist, bei dem ein Kopfdurchmesser eine maximale Dicke des Spitzenbereichs (11)nicht übersteigt, und wobei der Bolzen mit dem Kopf (12) nach Abschluss des Setzverfahrens bündig mit dem mindestens einen Bauteil (20; 22) abschließt oder an diesem (20; 22) übersteht.

15. Setzverfahren gemäß einem der vorhergehenden Ansprüche 11-14, in dem der Schweißkopf (62) des Schweißhilfsfügeteils (10) mit einer Seite des mindestens einen Bauteils (20; 22) bündig abschließt oder an der Seite des mindestens einen Bauteils (20; 22) mit der Austrittsstelle des Schweißhilfsfügeteils (10) vorsteht.

16. Setzverfahren gemäß einem der vorhergehenden Ansprüche 11 bis 15, bei dem ein Schweißhilfsfügeteil (10) gemäß einem der Ansprüche 1 bis 9 gesetzt wird.

17. Mindestens ein Bauteil (20; 22) aus einem nicht oder schlecht schweißbarem Material mit einem darin gesetzten Schweißhilfsfügeteil (10), **dadurch gekennzeichnet, dass** der Spitzenbereich (11) des Schweißhilfsfügeteils (10) zumindest teilweise bei einem Setzverfahren mit einer impulsartigen Kraft in einen Schweißkopf (62) oder Schweißpunkt mechanisch gestaucht worden ist, insbesondere ein Bauteil, in das ein Schweißhilfsfügeteil (10) mit dem Setzverfahren nach einem der Ansprüche 11-16 gesetzt worden ist.

18. Schweißverfahren zum Verbinden von mindestens einem ersten Bauteil (20; 22) aus nicht oder schlecht schweißbarem Material mit einem darin gesetzten Schweißhilfsfügeteil (10) mit einem mechanisch zumindest teilweise in einen Schweißkopf (62) oder Schweißpunkt gestauchten Spitzenbereich des Schweißhilfsfügeteils, insbesondere hergestellt mit dem Setzverfahren gemäß einem der Ansprüche 11-16, und mindestens einem zweiten Bauteil (30) aus schweißbarem Material oder mindestens einem zweiten Bauteil mit Bereichen aus schweißbarem Material, **dadurch gekennzeichnet, dass** bei dem Schweißverfahren:
das in das erste Bauteil (20; 22) ohne Abtrennen von Abfallmaterial von dem ersten Bauteil gesetzte Schweißhilfsfügeteil (10) an dem mechanisch zumindest teilweise in einen Schweißkopf (62) oder Schweißpunkt gestauchten Spitzenbereich des Schweißhilfsfügeteils (10) in Kontakt mit dem mindestens einen zweiten Bauteil (30) aus schweißbarem Material oder in Kontakt mit dem Bereich aus schweißbarem Material des mindestens einen zweiten Bauteils gebracht wird und
das erste (20; 22) und das zweite Bauteil (30) über das Schweißhilfsfügeteil (10) des mindestens einen ersten Bauteils miteinander verschweißt werden.

19. Schweißverfahren gemäß Anspruch 18, bei dem das mindestens eine zweite Bauteil in dem Bereich aus schweißbarem Material ein Schweißhilfsfügeteil, insbesondere ein Schweißhilfsfügeteil gemäß einem der Ansprüche 1 bis 9, umfasst.

20. Schweißverfahren gemäß Anspruch 18 oder 19, bei dem das mindestens eine erste Bauteil (20; 22) und das mindestens eine zweite Bauteil abgestimmt auf eine Form des deformierten Spitzenbereichs des Schweißhilfsfügeteils mittels Widerstandsbolzenschweißen, Widerstandspunktschweißen oder Bolzenschweißen mit Lichtbogen verschweißt werden.

21. Verbindungsverfahren für mindestens ein Bauteil (20; 22) aus nicht oder schlecht schweißbarem Material mit mindestens einem Bauteil (30) aus schweißbarem Material oder mit Bereichen aus schweißbarem Material mit einer Kombination des Setzverfahrens gemäß einem der Ansprüche 11 bis 16 und des Schweißverfahrens gemäß einem der Ansprüche 18 bis 20.

22. Mindestens ein erstes Bauteil (20; 22) aus einem nicht oder schlecht schweißbarem Material und mindestens ein zweites Bauteil aus schweißbarem Material oder mit mindestens einem Bereich aus schweißbarem Material, insbesondere ein Fahrzeug, die über ein in das mindestens erste Bauteil (20; 22), vorzugsweise mittels Hochgeschwindigkeitsfugen, gesetztes schweißbares Schweißhilfsfügeteil (10) mit einem mechanisch zumindest teilweise in einen Schweißkopf (62) oder Schweißpunkt gestauchten Spitzenbereich (62) ohne Abtrennen von Abfallmaterial von dem ersten Bauteil miteinander mittels Schweißen verbunden worden sind, insbesondere mithilfe des Verbindungsverfahrens gemäß Anspruch 21.

## Claims

1. Welding auxiliary joining part (10) in the shape of a stud (10) for joining into at least one component (20; 22) and for producing a welding connection from a plurality of components, preferably with at least one component (20; 22) of a non- or poorly weldable material, comprising the following features:
a. a head (12), a tip portion (11) extending in the longitudinal direction of the welding auxiliary joining part and having a maximum thickness transversely to the longitudinal direction, and preferably a shank (14), **characterized in that**
b. the stud (10) consists of a weldable steel with a carbon equivalent (CEV) of 0.2 to 0.8 which is plastically deformable during a setting method of the welding auxiliary joining part so that the tip portion (11) of the welding auxiliary joining part (10) is at least partly compressible to a welding head or weld spot (62).

2. Welding auxiliary joining part (10) according to claim 1, the head (12) of which has a diameter greater than the maximum thickness of the tip portion (11).

3. Welding auxiliary joining part (10) according to claim 1 or 2, the head (12) of which has an annular groove (16) at a side facing the tip portion (11) for receiving a material deformation of a component (20; 22) adjacent to the head.

4. Welding auxiliary joining part (10) according to one of the preceding claims, the head (12) of which has grooves or ribs at a side facing the tip portion (11), which extend in radial direction for providing receiving spaces for receiving a material deformation of a component (20; 22) adjacent to the head.

5. Welding auxiliary joining part (10) according to claim 1, the head (12) of which has a diameter equal to a diameter of the maximum thickness of the tip portion (11).

6. Welding auxiliary joining part (10) according to one of the preceding claims, having a shank (12) with a cylinder-like or at least a partly conical shape.

7. Welding auxiliary joining part (10) according to claim 6, the shank (12) of which has a knurling or profiling.

8. Welding auxiliary joining part (10) according to one of the preceding claims, the tip portion (11) of which has an ogival tip having an ogivality factor in the range of 1 to 10.

9. Welding auxiliary joining part (10) according to one of the preceding claims 1 to 7, the tip portion (11) of which has a conical or a pyramidal shape.

10. Usage of a stud (10) according to one of the claims 1 to 9 as welding auxiliary joining part.

11. Setting method for a welding auxiliary joining part (10), especially a welding auxiliary joining part (10) according to one of the claims 1 to 9, into at least one component (20; 22) made of a non- or poorly weldable material without pre-punching of the at least one component (20; 22), **characterized in that** the setting method comprises the following steps:
a. driving (S1) the welding auxiliary joining part (10) into the at least one component (20; 22) by means of an impulse-like force accelerating the welding auxiliary joining part (10) up to a velocity of at least 5 m/s, wherein
b. no waste material, especially no setting slug, is separated from the at least one component, and
c. compressing (S4) the welding auxiliary joining part at an exit location of the welding auxiliary joining part (10) out of the at least one component (20; 22) at an anvil (50) or at a supporting component (30) of high strength weldable material being arranged at the exit location of the welding auxiliary joining part (10) out of the at least one component (20; 22) during the setting such that a tip portion of the welding auxiliary joining part (10) is at least partly deformed to a welding head or weld spot (62).

12. Setting method according to claim 11, wherein the welding auxiliary joining part (10) is compressed at a flat anvil (50) or an anvil (50) with a depression-like surface contour (52; 54; 56) (S6; S7).

13. Setting method according to claim 11 or 12, wherein the welding auxiliary joining part (10) is a stud having a head (12) and at least a tip portion (11), wherein a head diameter is greater than a maximum thickness of the tip portion (11), and wherein, after completion of the setting method, the stud is arranged with a head underside facing the at least one component (20; 22) onto the at least one component (20; 22) or is spaced therefrom (S2; S3).

14. Setting method according to claim 11 or 12, wherein the welding auxiliary joining part (10) is a stud having a head (12) with a head diameter not exceeding a maximum thickness of the tip portion (11), and wherein, after completion of the setting method, the stud with the head (12) is arranged flush with the at least one component (20; 22) or protrudes therefrom (20; 22).

15. Setting method according to one of the preceding claims 11 to 14, wherein the welding head (62) of the welding auxiliary joining part (10) is arranged flush with one side of the at least one component (20; 22) or protrudes from the side of the at least one component (20; 22) having the exit location of the welding auxiliary joining part (10).

16. Setting method according to one of the preceding claims 11 to 15, wherein a welding auxiliary joining part (10) according to one of the claims 1 to 9 is set.

17. At least one component (20; 22) made from a non- or poorly weldable material having a welding auxiliary joining part (10) set therein, **characterized in that** the tip portion (11) of the welding auxiliary joining part (10) has been at least partly compressed to a welding head (62) or weld spot during a setting method with an impulse like force, especially a component into which a welding auxiliary joining part (10) has been set by the setting method according to one of the claims 11 to 16.

18. Welding method for connecting at least one first component (20; 22) made of non- or poorly weldable material having a welding auxiliary joining part (10) set therein with a tip portion of the welding auxiliary joining part being compressed mechanically at least partly to a welding head (62) or weld spot, especially produced by the setting method according to one of the claims 11 to 16, and at least a second component (30) made of weldable material or at least a second component with portions made of weldable material, **characterized in that** during the welding method:
the welding auxiliary joining part (10) set into the first component (20; 22) without separating waste material from the first component is brought into contact with the at least one second component (30) made of weldable material or into contact with the portion made of weldable material of the at least one second component at the tip portion of the welding auxiliary joining part (10) which is mechanically at least partly compressed to a welding head (62) or weld spot and
the first (20; 22) and the second component (30) are welded to each other via the welding auxiliary joining part (10) of the at least one first component.

19. Welding method according to claim 18, wherein the at least one second component in the portion made of weldable material comprises a welding auxiliary joining part, especially a welding auxiliary joining part according to one of the claims 1 to 9.

20. Welding method according to claim 18 or 19, wherein the at least one first component (20; 22) and the at least one second component are welded adapted to a shape of the deformed tip portion of the welding auxiliary joining part by means of resistance stud welding, resistance spot welding or stud welding with electric arc.

21. Connection method for at least one component (20; 22) made of non- or poorly weldable material with at least a component (30) made of weldable material or having portions made of weldable material by means of a combination of the setting method according to one of the claims 11 to 16 and the welding method according to one of the claims 18 to 20.

22. At least a first component (20; 22) of a non- or poorly weldable material and at least a second component made of weldable material or having at least a portion made of weldable material, especially a vehicle, which have been connected to each other by means of welding, especially by means of the connection method according to claim 21, via a weldable welding auxiliary joining part (10) set into the at least first component (20; 22), preferably via high-speed joining, having a tip portion which is mechanically at least partly compressed to a welding head (62) or weld spot and without separating waste material from the first component.

## Revendications

1. Pièce à assembler d'aide au soudage (10) sous forme d'un goujon (10) pour l'assemblage dans au moins un composant (20 ; 22) et la fabrication d'une connexion soudée à partir d'une pluralité de composants, de préférence avec au moins un composant (20 ; 22) en un matériau non ou difficilement soudable, qui présente les caractéristiques suivantes :
a. une tête (12), une région de pointe (11) qui s'étend dans la direction longitudinale de la pièce à assembler d'aide au soudage (10) et présente une épaisseur maximale transversalement à la direction longitudinale, et de préférence une tige (14), **caractérisée en ce que**
b. le goujon (10) se compose d'un acier soudable avec un équivalent en carbone CEV de 0,2 à 0,8 qui est déformable plastiquement pendant un procédé de pose de la pièce à assembler d'aide au soudage de sorte que la région de pointe (11) de la pièce à assembler d'aide au soudage (10) peut être au moins partiellement comprimée dans une tête de soudage ou un point de soudage (62).

2. Pièce à assembler d'aide au soudage (10) selon la revendication 1, dont la tête (12) présente un diamètre qui est supérieur à l'épaisseur maximale de la région de pointe (11).

3. Pièce à assembler d'aide au soudage (10) selon la revendication 1 ou 2, dont la tête (12) présente sur un côté tourné vers la région de pointe (11) une rainure annulaire (16) pour la réception d'une déformation de matériau d'un composant (20 ; 22) voisin de la tête.

4. Pièce à assembler d'aide au soudage (10) selon une des revendications précédentes, dont la tête (12) présente sur un côté tourné vers la région de pointe (11) des cannelures ou nervures s'étendant dans la direction radiale pour mettre à disposition des espaces de réception pour la réception d'une déformation de matériau d'un composant (20 ; 22) voisin de la tête.

5. Pièce à assembler d'aide au soudage (10) selon la revendication 1, dont la tête (12) présente un diamètre qui est égal à un diamètre de l'épaisseur maximale de la région de pointe (11).

6. Pièce à assembler d'aide au soudage (10) selon une des revendications précédentes, qui présente une tige (12) avec une forme similaire à un cylindre ou au moins partiellement tronconique.

7. Pièce à assembler d'aide au soudage (10) selon la revendication 6, dont la tige (12) présente un moletage ou profilage.

8. Pièce à assembler d'aide au soudage (10) selon une des revendications précédentes, dont la région de pointe (11) présente une pointe ogivale avec un facteur d'ogivalité dans une région de 1 à 10.

9. Pièce à assembler d'aide au soudage (10) selon une des revendications précédentes 1 à 7, dont la région de pointe (11) présente une configuration en forme de cône ou en forme de pyramide.

10. Utilisation d'un goujon (10) selon une des revendications 1 à 9 en tant que pièce à assembler d'aide au soudage.

11. Procédé de pose pour une pièce à assembler d'aide au soudage (10), notamment une pièce à assembler d'aide au soudage (10) selon une des revendications 1 à 9, dans au moins un composant (20 ; 22) en un matériau non ou difficilement soudable sans préperçage de l'au moins un composant (20 ; 22), **caractérisé en ce que** le procédé de pose présente les étapes suivantes :
a. enfoncement (S1) de la pièce à assembler d'aide au soudage (10) dans l'au moins un composant (20 ; 22) à l'aide d'une force en forme d'impulsion qui accélère la pièce à assembler d'aide au soudage (10) à une vitesse d'au moins 5 m/s ; dans lequel
b. aucun déchet de matériau, notamment aucun bouchon de pose, n'est séparé de l'au moins un composant, et
c. compression (S4) de la pièce à assembler d'aide au soudage à un point de sortie de la pièce à assembler d'aide au soudage (10) de l'au moins un composant (20 ; 22) sur une enclume (50) ou un composant de support (30) en matériau soudable hautement résistant qui est disposé(e) au point de sortie de la pièce à assembler d'aide au soudage (10) de l'au moins un composant (20 ; 22) pendant la pose de telle sorte qu'une région de pointe de la pièce à assembler d'aide au soudage (10) est au moins partiellement façonnée dans une tête de soudage ou un point de soudage (62).

12. Procédé de pose selon la revendication 11, dans lequel la pièce à assembler d'aide au soudage (10) est comprimée (S6 ; S7) sur une enclume plane (50) ou une enclume (50) avec un contour superficiel similaire à une cuvette (52 ; 54 ; 56).

13. Procédé de pose selon la revendication 11 ou 12, dans lequel la pièce à assembler d'aide au soudage (10) est un goujon avec une tête (12) et au moins une région de pointe (11), dans lequel un diamètre de tête est supérieur à une épaisseur maximale de la région de pointe (11), et dans lequel le goujon repose après la fin du procédé de pose avec un côté inférieur de tête tourné vers l'au moins un composant (20 ; 22) sur l'au moins un composant (20 ; 22) ou est écarté (S2 ; S3) de celui-ci.

14. Procédé de pose selon la revendication 11 ou 12, dans lequel la pièce à assembler d'aide au soudage (10) est un goujon avec une tête (12), dans lequel un diamètre de tête ne dépasse pas une épaisseur maximale de la région de pointe (11), et dans lequel le goujon se termine avec la tête (12) après la fin du procédé de pose à fleur avec l'au moins un composant (20 ; 22) ou déborde de celui-ci (20 ; 22).

15. Procédé de pose selon une des revendications précédentes 11 à 14, dans lequel la tête de soudage (62) de la pièce à assembler d'aide au soudage (10) se termine à fleur avec un côté de l'au moins un composant (20 ; 22) ou fait saillie sur le côté de l'au moins un composant (20 ; 22) avec le point de sortie de la pièce à assembler d'aide au soudage (10).

16. Procédé de pose selon une des revendications précédentes 11 à 15, dans lequel une pièce à assembler d'aide au soudage (10) selon une des revendications 1 à 9 est posée.

17. Au moins un composant (20 ; 22) en un matériau non ou difficilement soudable avec une pièce à assembler d'aide au soudage (10) posée en son sein, **caractérisé en ce que** la région de pointe (11) de la pièce à assembler d'aide au soudage (10) a été au moins partiellement comprimée mécaniquement lors d'un procédé de pose avec une force de type impulsion dans une tête de soudage (62) ou un point de soudage, notamment un composant dans lequel une pièce à assembler d'aide au soudage (10) a été posée avec le procédé de pose selon une des revendications 11 à 16.

18. Procédé de soudage pour la connexion d'au moins un premier composant (20 ; 22) en matériau non ou difficilement soudable avec une pièce à assembler d'aide au soudage (10) posée en son sein avec une région de pointe de la pièce à assembler d'aide au soudage comprimée mécaniquement au moins partiellement dans une tête de soudage (62) ou un point de soudage, notamment fabriquée avec le procédé de pose selon une des revendications 11 à 16, et d'au moins un second composant (30) en matériau soudable ou d'au moins un second composant avec des régions en matériau soudable, **caractérisé en ce que** lors du procédé de soudage :
la pièce à assembler d'aide au soudage (10) posée dans le premier composant (20 ; 22) sans séparation de déchet de matériau du premier composant est amenée en contact avec l'au moins un second composant (30) en matériau soudable ou en contact avec la région en matériau soudable de l'au moins un second composant au niveau de la région de pointe de la pièce à assembler d'aide au soudage (10) comprimée mécaniquement au moins partiellement dans une tête de soudage (62) ou un point de soudage, et
le premier (20 ; 22) et le second composant (30) sont soudés l'un à l'autre par le biais de la pièce à assembler d'aide au soudage (10) de l'au moins un premier composant.

19. Procédé de soudage selon la revendication 18, dans lequel l'au moins un second composant comprend dans la région en matériau soudable une pièce à assembler d'aide au soudage, notamment une pièce à assembler d'aide au soudage selon une des revendications 1 à 9.

20. Procédé de soudage selon la revendication 18 ou 19, dans lequel l'au moins un premier composant (20 ; 22) et l'au moins un second composant sont soudés pour correspondre à une forme de la région de pointe déformée de la pièce à assembler d'aide au soudage au moyen d'un soudage de goujons par résistance, soudage par résistance par points ou soudage de goujons avec des arcs électriques.

21. Procédé de connexion pour au moins un composant (20 ; 22) en matériau non ou difficilement soudable à au moins un composant (30) en matériau soudable ou avec des régions en matériau soudable avec une combinaison du procédé de pose selon une des revendications 11 à 16 et du procédé de soudage selon une des revendications 18 à 20.

22. Au moins un premier composant (20 ; 22) en un matériau non ou difficilement soudable et au moins un second composant en matériau soudable ou avec au moins une région en matériau soudable, notamment un véhicule, qui ont été connectés l'un à l'autre au moyen d'un soudage, notamment à l'aide du procédé de connexion selon la revendication 21, par le biais d'une pièce à assembler d'aide au soudage (10) soudable, posée dans l'au moins un premier composant (20 ; 22), de préférence au moyen d'un assemblage à haute vitesse, avec une région de pointe (62) comprimée mécaniquement au moins partiellement dans une tête de soudage (62) ou un point de soudage sans séparation de déchet de matériau du premier composant.
